# EUROPEAN PATENT APPLICATION

(11) **EP 4 822 764 A1**
(43) Date of publication of application: **14.10.2026**
(21) Application number: 25745398.5
(22) Date of filing: 24.01.2025
(51) Int. Cl.: H01M 4/136, H01M 50/451, H01M 50/491, H01M 10/0525, H01M 4/66, H01M 4/13, H01M 4/62, H01M 10/0585, H01M 10/052, H01M 4/02

(54) **ELECTRODE ASSEMBLY**

(30) Priority: 26.01.2024 KR 20240012285; 29.02.2024 KR 20240030195; 29.02.2024 KR 20240030197; 29.02.2024 KR 20240030198
(71) Applicant: LG Chem, Ltd., Seoul 07336 (KR); LG Energy Solution, Ltd., Seoul 07335 (KR)
(72) Inventor: SONG, In Taek, Daejeon 34122 (KR); KANG, Joon Koo, Daejeon 34122 (KR); KIM, Ki Hwan, Daejeon 34122 (KR); CHOI, Hyun Ju, Daejeon 34122 (KR); KOH, Jong Kwan, Daejeon 34122 (KR); YANG, Hee Myeong, Daejeon 34122 (KR); CHO, Woo Hyung, Daejeon 34122 (KR); LEE, Seok Kyeong, Daejeon 34122 (KR); LEE, Yu Mi, Daejeon 34122 (KR)
(74) Representative: Plasseraud IP
(86) International application number: PCT/KR2025/001490
(87) International publication number: WO 2025/159576

(57) **Abstract**

The present specification discloses an electrode assembly and a secondary battery. The present specification discloses an electrode assembly formed by combining: an electrode capable of exhibiting low resistance and excellent electrical characteristics in a normal state of a secondary battery, and securing stability by being rapidly converted into an insulator in an abnormal state thereof; and a separator which is referred to as a so-called SRS (safetyreinforcing separator). The present specification also discloses a secondary battery comprising the electrode assembly.

## Description

### Technical Field

This application claims the benefit of priority based on Korean Patent Application No. 10-2024-0012285 dated January 26, 2024, and Korean Patent Application Nos. 10-2024-0030198, 10-2024-0030197, and 10-2024-0030195 dated February 29, 2024, all the disclosures of which are incorporated herein by reference.

The present specification discloses an electrode assembly and a secondary battery comprising the same.

### Background Art

Secondary batteries (e.g., lithium-ion batteries) have various application fields, including portable electronics, electric vehicles (EVs), and renewable energy storage systems.

For example, secondary batteries applied as drive sources in transportation means such as electric vehicles require greater capacity and power.

The increased capacity and power of secondary batteries cause problems in stability of secondary batteries. For example, risk of a so-called thermal runaway phenomenon, or the like, which causes uncontrolled temperature increases and hazardous chemical leakage, increases with increased capacity and power.

Accordingly, commercially available secondary batteries are provided with external safety devices (e.g., pressure-limited valves, cell-to-cell fire extinguishers, or high thermal insulating materials, etc.), but such safety devices do not effectively cope with dangerous situations such as the thermal runway, or exhibit a slow response speed.

### Disclosure

### Technical Problem

The present specification discloses an electrode assembly. The present specification is intended to disclose an electrode assembly formed by combining: an electrode capable of exhibiting low resistance and excellent electrical characteristics in a normal state of a secondary battery, and securing stability by being rapidly converted into an insulator in an abnormal state thereof; and a separator which is referred to as a so-called SRS (safety-reinforcing separator).

The present specification also discloses a secondary battery comprising the electrode assembly.

### Technical Solution

In this specification, the term room temperature means a natural temperature without artificial heating and cooling. The room temperature may be, for example, any temperature within a range of 10°C to 30°C, or a temperature of about 23°C, or about 25°C or so.

Among physical properties mentioned herein, the physical property affected by a measurement temperature is a physical property measured at room temperature, unless otherwise specified.

In this specification, the unit of temperature is Celsius (°C), unless otherwise specified.

In this specification, the term normal pressure means a natural pressure without artificial pressurization and depressurization, which may typically mean a pressure within a range of about 730 mmHg to 790 mmHg or so.

Among physical properties mentioned herein, the physical property affected by a measurement pressure is a physical property measured at normal pressure, unless otherwise specified.

Among physical properties mentioned herein, the physical property affected by measurement humidity is a physical property measured at humidity without artificial adjustment under room temperature and normal pressure states, unless otherwise specified.

The term normal state means a normal operation or storage state of a secondary battery. For example, a normal charging, discharging, or storage state of a secondary battery is a normal state.

The term abnormal state means a dangerous state where abnormal temperature elevation, heat generation, or explosion, and the like has occurred or is likely to occur in secondary batteries, and the like.

The present specification discloses an electrode assembly.

The electrode assembly comprises a positive electrode (cathode); a negative electrode (anode); and a separator. The separator may be present between the positive electrode and the negative electrode. In the electrode assembly, the positive electrode, separator, and negative electrode may be laminated in this order to form a laminate.

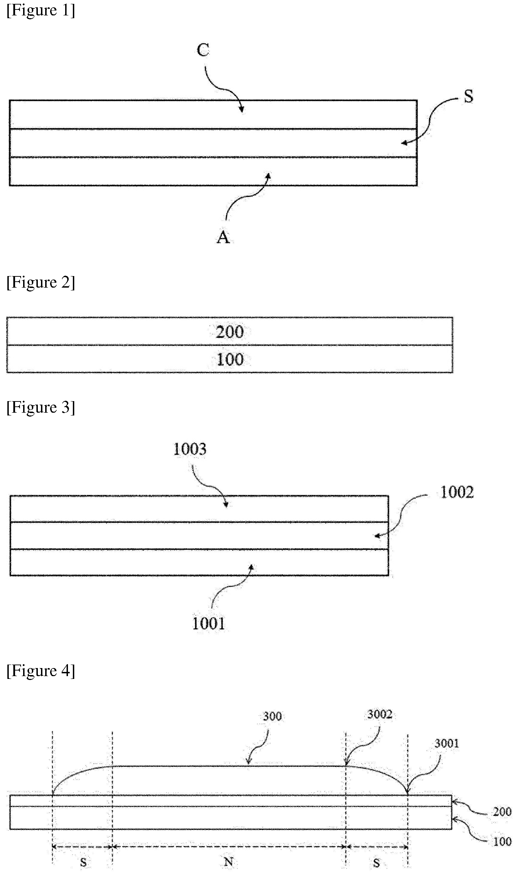

Figure 1 is an example of the laminate, which is a case where the positive electrode (C), separator (S), and negative electrode (A) are sequentially laminated.

The separator applied to the electrode assembly may be a separator called a so-called SRS (safety-reinforcing separator).

The SRS is a separator in the form that an inorganic particle layer is included on a surface of a separator base material (porous polymer membrane), which is a separator capable of exhibiting stability even at higher temperatures compared to general separators, and maintaining performance. By combining such a separator with a polymer layer to be described below, it is possible to secure significantly improved stability.

Such SRSs are well known.

For example, as shown in Figure 2, the SRS may comprise a porous polymer membrane (100) and an inorganic particle layer (200). In the form of Figure 2, the inorganic particle layer (200) is formed on one surface of the polymer membrane (100), but the inorganic particle layer (200) may also be formed on both surfaces of the polymer membrane (100).

As the porous polymer membrane, a polymer membrane typically applied to the SRS may be used. For example, a material facilitating lithium-ion movement and having excellent wettability in an electrolyte may be used.

In one example, as the porous polymer membrane, a polyolefin-based polymer membrane may be used.

The polyolefin-based polymer membrane usable as the porous polymer membrane in the SRS is known in the industry, and for example, a porous polymer membrane may be applied thereto, which is produced from one or a combination of two or more selected from the group consisting of polyethylene, such as high-density polyethylene, low-density polyethylene, linear low-density polyethylene, and ultra-high molecular weight polyethylene; polypropylene; polybutylene; polypentene, polyhexene, polyoctene; and copolymers containing two or more monomer units selected from the group consisting of ethylene, propylene, butene, pentene, 4-methylpentene, hexene, and octene.

The porous polymer membrane typically has a thickness of about 1µm to 100µm, or 5µm to 50µm or so. Furthermore, in such a porous polymer membrane, pores with a size of about 0.001 µm to 50 µm or so are typically formed, and a porosity degree is typically adjusted within a range of 10% to 95%.

The SRS comprises an inorganic particle layer formed on one or both surfaces of the porous polymer membrane. The term inorganic particle layer is a layer containing inorganic particles.

As the inorganic particles, those that oxidation and reduction reactions do not occur within an operating voltage range (e.g., 0V to 5V based on Li/Li⁺) of electrochemical devices such as secondary batteries may be used, and inorganic particles with ion transfer capabilities may also be used. For example, if inorganic particles with a high permittivity are applied, they contribute to an increase in a dissociation degree of electrolyte salts, such as lithium salts, within the electrolyte, whereby it is possible to improve an ionic conductivity of the electrolyte.

For example, as the inorganic particles, inorganic particles with a permittivity constant of 5 or more and/or inorganic particles with lithium-ion transfer capabilities may be applied.

As an example of such inorganic particles, one or more types of inorganic particles selected from the group consisting of BaTiO₃, Pb(Zr,Ti)O₃(PZT), Pb₁₋ₓLaₓZr_{1-y}Ti_{y}O₃(PLZT), PB(Mg₃Nb_{2/3})O₃-PbTiO₃(PMN-PT), HfO₂, SrTiO₃, SnO₂, CeO₂, MgO, NiO, CaO, ZnO, ZrO₂, Y₂O₃, Al₂O₃, TiO₂ and SiC; and/or one or more types of inorganic particles selected from the group consisting of glass of (LiAlTiP)ₓO_{y} (0<x<4, 0<y<13) series such as Li₃PO₄, LiₓTi_{y}(PO₄)₃ (0<x<2, 0<y<3), LiₓAl_{y}Ti_{z}(PO₄)₃ (0<x<2, 0<y<1, 0<z<3) and/or 14Li₂O-9Al₂O₃-38TiO₂-39P₂O₅, LiₓLa_{y}TiO₃ (0<x<2, 0<y<3) and/or LiₓGe_{y}P_{z}S_{w} (0<x<4, 0<y<1, 0<z<1, 0<w<5) such as Li_{3.25}Ge_{0.25}P_{0.75}S₄ and/or glass (LiₓSi_{y}S_{z}, 0<x<3, 0<y<2, 0<z<4) of SiS₂ series such as Li₃PO₄-Li₂S-SiS₂ and/or glass (LiₓP_{y}S_{z}, 0<x<3, 0<y<3, 0<z<7) of P₂S₅ series such as LiI-Li₂S-P₂S₅, may be used.

Such inorganic particles typically have a size in a range of 0.001 µm to 10 µm.

In the SRS, the inorganic particle layer may comprise a polymer binder together with the inorganic particles. As such a polymer binder. typically, polyvinylidene fluoride-co-hexafluoropropylene, polyvinylidene fluoride-co-trichloroethylene, polymethylmethacrylate, polybutylacrylate, polyacrylonitrile, polyvinylpyrrolidone, polyvinylacetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, an acrylonitrile-styrene-butadiene copolymer, and/or polyimide, and the like may be used, and one, or a mixture of two or more of these binders may be used.

The content of the inorganic particles in the inorganic particle layer may be 10 weight% to 95 weight%, 30 weight% to 95 weight%, 50 weight% to 95 weight%, or 70 weight% to 90 weight%, and when the binder is included, it may be included in a ratio of about 5 to 100 parts by weight, or 10 to 50 parts by weight or so, relative to 100 parts by weight of the inorganic particles.

The inorganic particle layer may further comprise, in addition to the binder, known necessary components, for example, organic particles, and the like for enhancing bonding force with the binder polymer, and improving breathability, thermal contractility, and peel strength.

The inorganic particle layer may typically have a thickness of 0.1 µm to 50 µm, or 1 µm to 10 µm or so. Methods for producing such an SRS are known, and the inorganic particle layer may be formed through such known methods.

The electrode assembly comprises a positive electrode and a negative electrode together with the separator.

The positive electrode and the negative electrode each comprise a current collector and an electrode active material layer formed on one or both surfaces of the current collector.

Either of or both the positive electrode and the negative electrode may comprise, for example, a polymer layer. Figure 3 is an example of an electrode structure comprising a polymer layer. When a polymer layer is included, the polymer layer (1002) may be present between the current collector (1001) and the active material layer (1003) of the positive electrode and/or the negative electrode.

For example, when the positive electrode comprises the polymer layer, the positive electrode may comprise a current collector; a polymer layer formed on the current collector; and an active material layer formed on the polymer layer.

In the electrode, the current collector and the polymer layer, and the polymer layer and the active material layer may be in contact with each other. In some cases, other elements may also exist between the current collector and the polymer layer, or between the polymer layer and the active material layer. While Figure 3 illustrates a case where the active material layer (1003) exists only on one surface of the current collector (1001), the active material layer (1003) may also exist on both surfaces of the current collector (1001). In this case, the polymer layer (1002) may also exist in two layers between each of the active material layers (1003) present on both surfaces of the current collector (1001) and the current collector (1001), and may also exist in one layer between any one of the active material layers (1003) present on both surfaces and the current collector (1001).

The polymer layer exhibits a so-called PTC (positive temperature coefficient) effect. Therefore, the polymer layer may variably control charge transfer through the electrode depending on the temperature.

By applying such a polymer layer, the electrode can exhibit low resistance and excellent electrical properties under the normal state, and can ensure stability through resistance increase under the abnormal state.

The term polymer layer means a layer comprising a polymer. For example, the lower limit of the content of the polymer included in the polymer layer may be 30, 35, 40, 45, 50, 55, 60, 65, 70, 75, 80, 85, 90, or 95 or so, and the upper limit thereof may be 100, 95, 90, 85, 80, 75, 70, 65, 60, 55, or 50 or so. The content is a content of the polymer based on the total weight of the polymer layer, the unit of which is weight%. The content may be within a range of more than or equal to, or more than any lower limit arbitrarily selected from the above-listed lower limits; or within a range of more than or equal to, or more than any lower limit arbitrarily selected from the above-listed lower limits while being less than or equal to, or less than any upper limit arbitrarily selected from the above-listed upper limits.

The polymer layer may not be a so-called electrode active material layer. Therefore, the content of the electrode active material within the polymer layer may be controlled. For example, the upper limit of the content of the electrode active material within the polymer layer may be 10, 9, 8, 7, 6, 5, 4, 3, 2, 1, 0.5, 0.1, 0.05, 0.01, 0.005, or 0.001 or so, and the lower limit thereof may be 0. The content is a content of the electrode active material based on the total weight of the polymer layer, the unit of which is weight%. The content may be within a range of less than or equal to, or less than any upper limit arbitrarily selected from the above-listed upper limits; or within a range of more than or equal to, or more than any lower limit arbitrarily selected from the above-listed lower limits while being less than or equal to, or less than any upper limit arbitrarily selected from the above-listed upper limits. Specific types of the electrode active material will be described below.

The conductive polymer included in the polymer layer is a polymer exhibiting conductivity by a conjugated system of a polymer chain and/or doping, and the like, as is known.

For example, the lower limit of the content of the conductive polymer included in the polymer layer may be 30, 35, 40, 45, 50, 55, 60, 65, 70, 75, 80, 85, 90, or 95 or so, and the upper limit thereof may be 100, 95, 90, 85, 80, 75, 70, 65, 60, 55, or 50 or so. The content is a content of the conductive polymer based on the total weight of the polymer layer, the unit of which is weight%. The content may be within a range of more than or equal to, or more than any lower limit arbitrarily selected from the above-listed lower limits; or within a range of more than or equal to, or more than any lower limit arbitrarily selected from the above-listed lower limits while being less than or equal to, or less than any upper limit arbitrarily selected from the above-listed upper limits.

The polymer layer exhibits a so-called PTC (positive temperature coefficient) effect. Therefore, the polymer layer may variably control charge transfer through the electrode depending on the temperature.

By applying such a polymer layer, the electrode assembly can be applied to secondary batteries, and the like, to exhibit excellent electrical characteristics, including low resistance, in a normal state, and can ensure stability through increased resistance in an abnormal state.

In order that the polymer layer exhibits the effect, the tendency of the PTC effect exhibited by the polymer layer must be controlled. The PTC effect is an effect in which resistance increases in proportion to the temperature. In order that an electrode to which a polymer layer having the PTC effect is applied operates stably, and ensures stability in an abnormal state, the oxidation potential of the polymer layer, the electrical characteristics before the resistance increases due to the PTC effect, and the time point when the resistance increases due to the PTC effect, and the like must be adjusted.

For example, when the oxidation potential of the polymer layer is higher than that of the electrode active material, a potential drop can occur upon repeated charging and discharging and high-speed charging and discharging in a normal state. Furthermore, if the resistance of the polymer layer is excessively high in the normal state, charge transfer is restricted, thereby adversely affecting the operation of the secondary battery. In addition, if the temperature at which the PTC effect is expressed is within the temperature range in the normal state, the secondary battery performance cannot be properly expressed.

The polymer layer has a PTC effect, and a controlled expression time point of the PTC effect is controlled, and maintains stable oxidation potential and electrical characteristics before the PTC effect expression.

For expression of such a PTC effect, a specific conductive polymer may be introduced into the polymer layer. For example, as described below, by applying a conductive polymer having a relatively long hydrocarbon chain (long-chain hydrocarbon functional group) and controlling a drying or annealing temperature during a polymer layer formation process, a suitable PTC effect (e.g., inducing a resistance increase of the polymer layer at a desired temperature (temperature of the battery in the abnormal state)) can be secured.

By introducing a conductive material into the polymer layer and uniformly dispersing it, it is also possible to appropriately maintain oxidation potentials or electrical characteristics.

For example, the polymer layer, the current collector, or the electrode to which the polymer layer is applied may be provided such that Q in Equation 1 below falls within a predetermined range. [Equation 1] $Q = {R}_{3 v} / {R}_{3.5 v}$

In Equation 1, R₃ᵥ is the AC impedance resistance under voltage conditions of 25°C and 3V, and R_{3.5v} is the AC impedance resistance at the time point when 1 second has passed after the voltage has been converted to 3.5V from the voltage conditions of 25°C and 3V. The AC impedance resistances R₃ᵥ and R_{3.5v} are resistances confirmed in a coin cell to which the current collector on which the polymer layer is formed or the electrode manufactured using the current collector is applied, and the measurement method thereof follows the manner described in "4. AC impedance resistance measurement at 3V and 3.5V" section of Example sections of this specification.

The lower limit of Q above may be 5, 10, 15, 20, 25, 30, 35, 40, 50, 60, 70, 80, 90, or 100 or so, and the upper limit thereof may be 300, 200, 190, 180, 170, 160, 150, 140, 130, 120, 110, 100, 90, 80, 70, 60, 50, 40, 30, or 20 or so. The Q may be within a range of more than or equal to, or more than any lower limit arbitrarily selected from the above-listed lower limits; or within a range of less than, or equal to or less than any upper limit arbitrarily selected from the above-listed upper limits simultaneously while being more than or equal to, or more than any lower limit arbitrarily selected from the above-listed lower limits. The matter that a rapid resistance decrease occurs within a short period of time after changing the voltage condition from 3V to 3.5V indicates excellent electrical reactivity of the polymer layer.

The upper limit of the AC impedance resistance R_{3V} in Equation 1 may be 50,000, 45,000, 40,000, or 35,000 or so, and the lower limit thereof may be 10,000, 20,000, 30,000, or 35,000 or so. The unit of R_{3V} above is Ω, and its range may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

The upper limit of the AC impedance resistance R_{3.5V} in Equation 1 may be 2,500, 2,000 1,500, 1,000, 800, 600, or 400 or so, and the lower limit thereof may be 100, 200, 300, 500, 700, 900, 1,100, 1,300, or 1,500 or so. The unit of R_{3.5V} is Ω, and its range may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

The polymer layer may comprise a conductive material, to ensure excellent electrical reactivity. While excellent electrical reactivity may be maintained through the application of the conductive material, the conductive material may increase surface roughness of the polymer layer. If the surface roughness of the polymer layer is high, it may become difficult to uniformly form an active material layer applied to the top of the relevant layer, and it may deteriorate a rolling efficiency for electrode manufacturing. The polymer layer disclosed herein maintains stable surface roughness, which is the same even when the polymer layer comprises the conductive material.

The thickness of the polymer layer may be appropriately selected depending on the intended purpose. For example, the lower limit of the thickness of the polymer layer may be 50 nm, 100 nm, 150 nm, 200 nm, 250 nm, 300 nm, 350 nm, or 400 nm or so, and the upper limit thereof may be 1,000 nm, 900 nm, 800 nm, 700 nm, 600 nm, 500 nm, or 400 nm or so. The thickness may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

For example, the ratio of arithmetic mean roughness Ra of the polymer layer to the thickness may be within a predetermined range. The upper limit of the ratio of the arithmetic mean roughness Ra of the polymer layer to the thickness may be 50%, 45%, 40%, 38%, 36%, 34%, 32%, 30%, 28%, 26%, or 25% or so, and the lower limit thereof is not particularly limited, but may be 0.001%, 0.01%, 0.1%, 1%, 5%, 10%, 15%, or 20% or so. The ratio may be within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits. Here, the ratio of the arithmetic mean roughness Ra of the polymer layer to the thickness (T) is a value calculated by an equation 100xRa/T. Furthermore, here, the applied thickness T of the polymer layer is an average thickness of the polymer layer. The thickness of the polymer layer for the calculation is measured in the manner described in "3. Thickness measurement" of Example sections of this specification, and the arithmetic mean roughness is measured in the manner described in "7. Arithmetic mean roughness Ra" of Example sections of this specification.

For example, the upper limit of the arithmetic mean roughness Ra of the polymer layer may be 500 nm, 400 nm, 350 nm, 300 nm, 250 nm, 230 nm, 200 nm, 190 nm, 180 nm, 170 nm, 160 nm, 150 nm, 140 nm, 130 nm, 120 nm, 110 nm, or 100 nm or so, and the lower limit thereof may be 1 nm, 5 nm, 10 nm, 50 nm, 60 nm, 70 nm, 80 nm, 90 nm, 100 nm, 120 nm, 130 nm, 140 nm, or 150 nm or so. The arithmetic mean roughness Ra may be within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits. The arithmetic mean roughness Ra is measured in the manner described in "7. Arithmetic mean roughness Ra" of Example sections of this specification.

When a conductive material is included into a polymer layer, the dispersibility of the conductive material can be stably maintained. Therefore, the polymer layer can maintain a uniform surface with low roughness while securing advantages associated with the application of the conductive material, such as excellent electrical reactivity. This low surface roughness contributes to ensuring scratch resistance, and allows additional layers, such as an active material layer, to be stably formed on the polymer layer, and subsequent processes, such as a rolling process, to proceed stably.

The polymer layer, or a current collector or electrode comprising the same, can exhibit a precisely designed PTC effect, thereby maintaining excellent electrical properties at temperatures in a normal state, and then exhibiting a resistance-increasing effect in an abnormal state.

For example, the polymer layer, or the current collector or electrode comprising the same may be designed so that P in Equation 2 below falls within a predetermined range. [Equation 2] $P = {R}_{130} / {R}_{25}$

In Equation 2, R₁₃₀ is the AC impedance resistance at 130°C, and R₂₅ is the AC impedance resistance at 25°C. The AC impedance resistances R₁₃₀ and R₂₅ are resistances confirmed in a coin cell to which the current collector having the polymer layer formed thereon or the electrode applying the current collector having the polymer layer formed thereon is applied, and the measurement method thereof follows the manner described in "5. AC impedance resistance measurement at room temperature (25°C) and 130°C" section of Example sections of this specification.

The lower limit of P in Equation 2 may be 60, 70, 80, 90 100, 150, 200, 250, 300, 350, 400, 450, 500, 550, 600, 650, 700, 750, 800, 850, 900, or 950 or so, and the upper limit thereof is not particularly limited, but may be 10,000, 9,000, 8,000, 7,000, 6,000, 5,000, 4,000, 3,000, 2,000 1,500, 1,400, 1,300, 1,200, 1,100, 1,000, 950, 900, 850, 800, 750, 700, 650, 600, 550, or 500 or so. The P may be within a range of more than or equal to, or more than any lower limit arbitrarily selected from the above-listed lower limits; or within a range of less than, or equal to or less than any upper limit arbitrarily selected from the above-listed upper limits while being more than or equal to, or more than any lower limit arbitrarily selected from the above-listed lower limits.

The polymer layer, the current collector comprising the same, or the electrode comprising the same exhibits a large resistance difference between room temperature (about 25°C) and a high temperature (130°C), which is due to the PTC effect.

The polymer layer, the current collector comprising the same, or the electrode comprising the same may exhibit a low resistance at room temperature (about 25°C) while exhibiting the P value.

For example, the upper limit of the AC impedance resistance R₂₅ in Equation 2 above may be 700, 650, 600, 550, 500, 450, 400, 350, 300, 250, 200, 150, 140, 130, 120, 110, 100, 90, 80, 70, 60, 50, 45, or 40 or so, and the lower limit thereof is not particularly limited, but may be, for example, 10, 15, 20, 25, 30, 35, 40, or 45 or so. The unit of the AC impedance resistance R₂₅ is Ω, and the range may be within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits. Through such characteristics, it is possible to enable stable operation or storage of electronic devices in a normal state.

The lower limit of the AC impedance resistance R₁₃₀ in Equation 2 may be 10,000, 10,200, 10,400, 10,600, 10,800, 11,000, 13,000, 15,000, 17,000, 19,000, 21,000, 23,000, 25,000, 27,000, 29,000, or 31,000 or so, and the upper limit thereof is not particularly limited, but may be, for example, 60,000, 50,000, 40,000, 35,000, 34,000, or 32,000 or so. The unit of the AC impedance resistance R₁₃₀ is Ω, and the range may be within a range of more than or equal to, or more than any lower limit arbitrarily selected from the above-listed lower limits; or within a range of less than or equal to, or less than any upper limit arbitrarily selected from the above-listed upper limits simultaneously while being more than or equal to, or more than any lower limit arbitrarily selected from the above-listed lower limits.

The electrode assembly comprising the polymer layer and the separator can exhibit excellent stability even against external impacts.

For example, the electrode assembly can exhibit a maximum temperature in a certain level or less during an impact test.

The maximum temperature is the maximum temperature confirmed during an impact test performed according to Test Example 4 section of this specification. The upper limit of this maximum temperature may be 200°C, 150°C, or 100°C or so, and the lower limit thereof may be 20°C, 40°C, 60°C, or 80°C or so. The maximum temperature may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

Furthermore, the electrode assembly can exhibit a temperature rise rate in a certain level or less during the impact test. The upper limit of the temperature rise rate may be 40, 35, 30, 25, 20, 15, 10, 5, 1, or 0.5 or so, and the lower limit thereof may be 0.01, 0.05, 0.1, 0.15, or 0.2 or so. The temperature rise rate may be within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits. The unit of the temperature rise rate is 40°C/sec.

The maximum temperature and temperature rise rate may be confirmed according to the contents of Test Example 4 of this specification.

As the current collectors for the positive electrode or negative electrode, those commonly used as current collectors for positive or negative electrodes may be used without any special limitations.

If the current collector has conductivity without causing chemical changes in applied devices such as secondary batteries, the type, size, and shape thereof, and the like are not particularly limited. An example of a material that can be used as the current collector may be exemplified by a material, and the like in which the surface of copper, aluminum, or stainless steel is surface-treated with carbon, nickel, titanium, or silver, and the like. The current collector may be in the form of a film, sheet, foil, net, porous body, foam, or non-woven fabric, and the like, which comprises the above material. In some cases, a known surface treatment may also be performed on the surface of the current collector to improve adhesive force to other layers such as a polymer layer or an active material layer.

Such a current collector may typically have a thickness in a range of 3 µm to 500 µm, but is not limited thereto.

The polymer layer is present on one surface or both surfaces of the current collector. As is known, the conductive polymer is a polymer exhibiting conductivity by a conjugated system of a polymer chain and/or doping, and the like.

The conductive polymer may have a weight-average molecular weight in a predetermined range. For example, the lower limit of the weight average molecular weight of the conductive polymer may be 10,000, 15,000, 20,000, 25,000, 30,000, 35,000, 40,000, 45,000, 50,000, 55,000, 60,000, 65,000, 70,000, 75,000, 80,000, 85,000, 90,000, 95,000, 100,000, 105,000, 110,000, 115,000, 120,000, 125,000, 130,000, 135,000, 140,000, 145,000, or 150,000 or so, and the upper limit thereof may be 1,000,000, 950,000, 900,000, 850,000, 800,000, 750,000, 700,000, 650,000, 600,000, 550,000, 500,000, 450,000, 400,000, 350,000, 300,000, 250,000, 200,000, 150,000, 110,000, 100,000, 80,000, 60,000, or 55,000 or so. The unit of the weight average molecular weight is g/mol, and the range may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits. By using a conductive polymer having the weight average molecular weight as above, it is possible to effectively form a polymer layer and electrode having desired properties.

The molecular weight distribution, i.e., the ratio of the weight average molecular weight (Mw) to the number average molecular weight (Mn), of the conductive polymer may be within a predetermined range. The lower limit of the molecular weight distribution may be about 2, 2.5, 3, 3.5, or 4 or so, and the upper limit thereof may be 8, 7.5, 7, 6.5, 6, 5.5, 5, 4.5, 4, or 3.5 or so. The molecular weight distribution may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits. By using a conductive polymer having the molecular weight distribution as above, it is possible to effectively form a polymer layer, an electrode current collector, and an electrode having desired properties.

The weight-average molecular weight and molecular weight distribution may be evaluated in the manner described in "2. GPC (Gel Permeation Chromatograph)" of Example sections of this specification.

The conductive polymer may be polythiophene.

The term polythiophene means a polymer containing a thiophene monomer unit in a certain level or more. The lower limit of the ratio of the thiophene monomer unit in the polythiophene may be 50 mol%, 55 mol%, 60 mol%, 65 mol%, 70 mol%, 75 mol%, 80 mol%, 85 mol%, or 90 mol% or so, based on the total monomer units of the polymer, and the upper limit thereof may be 100 mol%, 95 mol%, 90 mol%, 85 mol%, 80 mol%, 75 mol%, 70 mol%, 65 mol%, or 60 mol% or so, relative to the mole number of the total monomer units of the polythiophene. The ratio of the thiophene monomer unit may be within a range of more than or equal to, or more than any lower limit arbitrarily selected from the above-listed lower limits; or within a range of less than, or equal to or less than any upper limit arbitrarily selected from the above-listed upper limits simultaneously while being more than or equal to, or more than any lower limit arbitrarily selected from the above-listed lower limits.

In this specification, the monomer unit means a form in which any monomer is polymerized to be included in a polymer, and the thiophene monomer is a monomer of a thiophene series, which means a monomer containing a thiophene skeleton.

The conductive polymer may contain a long-chain hydrocarbon functional group or a monomer unit having the long-chain hydrocarbon functional group (hereinafter, may be referred to as unit A). The conductive polymer may be polythiophene. In this case, the monomer having the long-chain hydrocarbon functional group may be a thiophene monomer.

The term long-chain hydrocarbon functional group means a monovalent hydrocarbon group having a carbon number in a certain level or more, or a monovalent functional group including the monovalent hydrocarbon group having a carbon number in a certain level or more.

For example, the lower limit of the carbon number (i.e., the carbon number of the monovalent hydrocarbon group) present in the long-chain hydrocarbon functional group may be 3, 4, 5, 6, 7, 8, 9, 10, 11, or 12 or so, and the upper limit thereof may be 30, 29, 28, 27, 26, 25, 24, 23, 22, 21, 20, 19, 18, 17, 16, 15, 14, 13, 12, 11, 10, 9, 8, 7, 6, 5, or 4 or so. The carbon number may be within a range of more than or equal to, or more than any lower limit of the above-described lower limits; or within a range of more than or equal to, or more than any lower limit of the above-described lower limits while being less than or equal to, or less than any upper limit of the above-described upper limits.

The carbon number may be the total carbon number present in the long-chain hydrocarbon functional group, or the carbon number of the hydrocarbon chain of the linear structure included in the functional group. That is, the monovalent hydrocarbon group present in the long-chain hydrocarbon functional group may have a linear structure or a branched structure, and even in the case of the branched structure, the carbon number constituting the longest linear chain in the relevant branched structure may be within the range. For example, if the branched structure is a 2-ethylhexyl group, the carbon number constituting the longest linear chain is 6.

An example of the long-chain hydrocarbon functional group may be exemplified by one or more selected from the group consisting of an alkyl group, an alkenyl group, an alkynyl group, an alkoxy group, an alkylcarbonyl group, and an alkylcarbonyloxy group. In an appropriate example, the long-chain hydrocarbon functional group may be an alkyl group and/or an alkoxy group.

The carbon number present in the alkyl group, the alkenyl group, the alkynyl group, the alkoxy group, the alkyl group of the alkylcarbonyl group, and the alkyl group of the alkylcarbonyloxy group may be in the range of the carbon number (i.e., the carbon number of the monovalent hydrocarbon group) present in the long-chain hydrocarbon functional group.

For example, the alkyl group, the alkenyl group, the alkynyl group, the alkoxy group, the alkyl group of the alkylcarbonyl group, and the alkyl group of the alkylcarbonyloxy group may be a linear or branched structure. In the case of a branched chain, the carbon number constituting the longest linear chain in the relevant branched structure may be in the range.

The alkyl group, the alkenyl group, the alkynyl group, the alkoxy group, the alkylcarbonyl group, or the alkylcarbonyloxy group, which is the long-chain hydrocarbon functional group, may also be optionally substituted with one or more substituents.

Such a long-chain hydrocarbon functional group is a functional group capable of imparting appropriate mobility to the monomers or the conductive polymer itself during the polymerization process of the conductive polymer. A monomer containing such a long-chain hydrocarbon functional group imparts appropriate mobility to a monomer mixture, and diffuses within the monomer mixture as well, thereby enabling polymerization to occur with an excellent efficiency. Furthermore, the conductive polymer having the long-chain hydrocarbon functional group can allow a polymer layer to be formable stably and uniformly through the appropriate mobility between the current collector and the active material layer.

The long-chain hydrocarbon functional group is appropriately oriented during a drying or annealing process applied in a formation process of the polymer layer, thereby also enabling the PTC effect suitable to the polymer to be adjustable. If a certain amount of heat energy is applied to the long-chain hydrocarbon functional group, it vibrates due to the heat, and de-doping of anions bound to the polymer is promoted by this vibration (thermal vibration), and accordingly, a resistance increase is induced. The temperature at which the thermal vibration occurs may be controlled by the length and/or amount of the long-chain hydrocarbon functional group. For example, under the same temperature, the thermal vibration of a relatively long chain is greater than that of a relatively short chain, whereby the long chain can induce a resistance-enhancing effect at a relatively low temperature. Therefore, the desired PTC effect can be set by controlling the length and/or ratio of the long-chain hydrocarbon functional group.

For example, to appropriately implement the effect, the molar ratio of the monomer unit (unit A) bearing the long-chain hydrocarbon functional group relative to the mole number of all monomer units in the conductive polymer may be adjusted. For example, the lower limit of the molar ratio may be 50 mol%, 55 mol%, 60 mol%, 65 mol%, 70 mol%, 75 mol%, 80 mol%, 85 mol%, or 90 mol% or so, and the upper limit thereof may be 98 mol%, 95 mol%, 90 mol%, 85 mol%, 80 mol%, 75 mol%, 70 mol%, 65 mol%, or 60 mol% or so, relative to the mole number of all monomer units of the polythiophene. The ratio may be within a range of more than or equal to, or more than any lower limit of the above-described lower limits; or within a range of more than or equal to, or more than any lower limit of the above-described lower limits while being less than or equal to, or less than any upper limit of the above-described upper limits.

The conductive polymer may contain, as the long-chain hydrocarbon functional group, a hydrocarbon functional group having 10 or more carbon atoms (hereinafter, may be referred to as a first hydrocarbon functional group) and a hydrocarbon functional group having 9 or less carbon atoms (hereinafter, may be referred to as a second hydrocarbon functional group).

The lower limit of the carbon number of the first hydrocarbon functional group may be 10, 11, or 12 or so, and the upper limit thereof may be 20, 19, 18, 17, 16, 15, 14, 13, 12, 11, or 10 or so. The carbon number of the first hydrocarbon functional group may be within a range of more than or equal to, or more than any lower limit arbitrarily selected from the above-listed lower limits; or within a range of more than or equal to, or more than any lower limit arbitrarily selected from the above-listed lower limits while being less than or equal to, or less than any upper limit arbitrarily selected from the above-listed upper limits.

The lower limit of the carbon number of the second hydrocarbon functional group may be 3, 4, 5, 6, 7, or 8 or so, and the upper limit thereof may be 9, 8, 7, or 6 or so. The carbon number of the second hydrocarbon functional group may be within a range of less than or equal to, or less than any upper limit arbitrarily selected from the above-listed upper limits; or within a range of more than or equal to, or more than any lower limit arbitrarily selected from the above-listed lower limits while being less than or equal to, or less than any upper limit arbitrarily selected from the above-listed upper limits.

The carbon number of each of the first and second hydrocarbon functional groups may be the carbon number of the straight-structure hydrocarbon chain present in the hydrocarbon functional group. For example, the first and second hydrocarbon functional groups may each independently be at least one selected from the group consisting of an alkyl group, an alkenyl group, an alkynyl group, an alkoxy group, an alkylcarbonyl group, and an alkylcarbonyloxy group, and may be, in an appropriate example, an alkyl group and/or an alkoxy group, where the carbon number may be the carbon number of the alkyl group, the alkenyl group, the alkynyl group, the alkoxy group, the alkyl group of the alkylcarbonyl group, and the alkyl group of the alkylcarbonyloxy group.

The alkyl group, the alkenyl group, the alkynyl group, the alkoxy group, the alkyl group of the alkylcarbonyl group, and the alkyl group of the alkylcarbonyloxy group may have a linear or branched structure, where in the case of the linear chain, the total carbon number may be within the above range, and in the case of the branched chain, the carbon number constituting the longest linear chain in the relevant branched structure may be within the above range.

the carbon number of the long-chain hydrocarbon functional group is related to the vibration characteristics due to applied thermal energy, and if the carbon number changes, such vibration characteristics also change, and the vibration characteristics are also linked to the PTC characteristics of the conductive polymer. In the conductive polymer of the present application, the first hydrocarbon functional group primarily plays a role in adjusting the temperature where the PTC effect is expressed, i.e., the temperature where the resistance increase occurs, and the second hydrocarbon functional group plays a role in suppressing the resistance increase at relatively low temperatures.

In the conductive polymer, the ratio of the total mole number of the monomer units having the first hydrocarbon functional group and the monomer units having the second hydrocarbon functional group relative to the mole number of all monomer units of the conductive polymer may be adjusted within the range of the ratio of unit A as described above.

The lower limit of ratio (M2/M1) of the mole number (M2) of the second hydrocarbon functional group to the mole number (M1) of the first hydrocarbon functional group in the conductive polymer; or the ratio (M2/M1) of the mole number (M2) of the monomer unit having the second hydrocarbon functional group to the mole number (M1) of the monomer unit having the first hydrocarbon functional group may be 0.01, 0.05, 0.1, 0.5, 1, 1.5, or 2 or so, and the upper limit thereof may be 100, 95, 90, 85, 80, 75, 70, 65, 60, 55, 50, 45, 40, 35, 30, 25, 20, 15, 10, 9, 8, 7, 6, 5, 4, 3, 2, 1, or 0.7 or so. The ratio may be less than or equal to, or less than any upper limit arbitrarily selected from the above-listed upper limits, or may be more than or equal to, or more than any lower limit arbitrarily selected from the above-listed lower limits, or may also have a range of more than or equal to, or more than any lower limit arbitrarily selected from the above-listed lower limits while being less than or equal to, or less than any upper limit arbitrarily selected from the above-listed upper limits.

Under such a ratio, the conductive polymer or polymer layer can exhibit an appropriate PTC (Positive Temperature Coefficient) effect, and exhibit stable electrical properties at temperatures in a normal state, and as surface properties of the polymer layer are adjusted, it can allow excellent adhesive force to be ensured in the electrode or electrode current collector.

The conductive polymer may contain a polar functional group or a monomer unit (hereinafter, may be referred to as unit B) having the polar functional group, together with the long-chain hydrocarbon functional group or unit A. The monomer having the polar functional group may be a thiophene monomer.

In this specification, the term polar functional group is a functional group containing one, or two or more polar atoms, for example, oxygen and/or nitrogen. An example of such a functional group includes a carboxyl group, a hydroxy group, an amino group, a cyano group, a nitro group, an ether group, or a functional group of Formula 1 below, but is not limited thereto. In one example, as the polar functional group, a functional group of Formula 1 below may be applied.

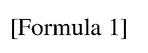

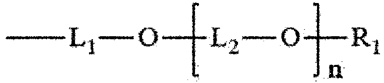

In Formula 1, L₁ is a single bond, an alkylene group or an alkylidene group, L₂ is an alkylene group or an alkylidene group, R₁ is hydrogen or an alkyl group, and n is an arbitrary number.

In Formula 1, the matter that L₁ is a single bond means a form that L₁ does not exist and the oxygen atom between L₁ and L₂ is directly connected to the monomer.

In one example, the alkyl group of R₁ in Formula 1 may be an alkyl group with 1 to 20 carbon atoms, 1 to 16 carbon atoms, 1 to 12 carbon atoms, 1 to 8 carbon atoms or 1 to 4 carbon atoms, or may be a methyl group or an ethyl group. The alkyl group may be linear, branched, or cyclic, and may be linear or branched, as appropriate. The alkyl group may be optionally substituted with one or more substituents.

In this specification, the term alkylene group means a divalent functional group formed by removing one hydrogen atom from each of two different carbon atoms in an alkane, and the term alkylidene group means a divalent functional group formed by removing two hydrogen atoms from one carbon atom in an alkane.

In one example, the alkylene groups of L₂ and L₁ in Formula 1 may each be an alkylene group with 2 to 20 carbon atoms, 2 to 16 carbon atoms, 2 to 12 carbon atoms, 2 to 8 carbon atoms or 2 to 4 carbon atoms, or may each be an ethylene group or a propylene group. The alkylene group may be linear, branched, or cyclic, and may be linear or branched, as appropriate. The alkylene group may be optionally substituted with one or more substituents.

In one example, the alkylidene groups of L₂ and L₁ in Formula 1 may each be an alkylidene group with 1 to 20 carbon atoms, 1 to 16 carbon atoms, 1 to 12 carbon atoms, 1 to 8 carbon atoms or 1 to 4 carbon atoms, or may each be a methylidene group, an ethylidene group or a propylidene group. The alkylidene group may be linear, branched, or cyclic, and may be linear or branched, as appropriate. The alkylidene group may be optionally substituted with one or more substituents.

In Formula 1, the lower limit of n may be 1, 2, 3, or 4, and the upper limit thereof may be 10, 9, 8, 7, 6, 5, 4, or 3 or so. The n may be within a range of more than or equal to, or more than any lower limit of the above-described lower limits while being less than or equal to, or less than any upper limit of the above-described upper limits.

Through application of the polar functional group, the polymer layer can be bonded to another layer to have appropriate bonding force, and such a conductive polymer layer can be uniformly formed to efficiently achieve the desired protective function. Furthermore, the polar functional group can also play a role in suppressing the PTC effect from occurring at relatively low temperatures.

The mole numbers of the polar functional group and the long-chain hydrocarbon functional group in the conductive polymer may be controlled to ensure an appropriate effect.

For example, the lower limit of the ratio (M_{L}/M_{P}) of the mole number (M_{L}) of the long-chain hydrocarbon functional group to the mole number (M_{P}) of the polar functional group in the conductive polymer may be 1, 5, 10, 15, 16, 17, 18, or 19 or so, and the upper limit thereof may be 500, 450, 400, 350, 300, 250, 200, 150, 100, 95, 90, 85, 80, 75, 70, 65, 60, 55, 50, 45, 40, 35, 30, 25, or 20 or so. The ratio M_{L}/M_{P} may be within a range of less than or equal to, or less than any upper limit arbitrarily selected from the above-listed upper limits; or within a range of more than or equal to, or more than any lower limit arbitrarily selected from the above-listed lower limits; or within a range of more than or equal to, or more than any lower limit arbitrarily selected from the above-listed lower limits while being less than or equal to, or less than any upper limit arbitrarily selected from the above-listed upper limits.

The lower limit of the ratio (M_{A}/M_{B}) of the unit A (M_{A}) to the mole number (M_{B}) of the unit B in the conductive polymer may be 1, 5, 10, 15, 16, 17, 18, or 19 or so, and the upper limit thereof may be 500, 450, 400, 350, 300, 250, 200, 150, 100, 95, 90, 85, 80, 75, 70, 65, 60, 55, 50, 45, 40, 35, 30, 25, or 20 or so. The ratio M_{A}/M_{B} may be within a range of less than or equal to, or less than any upper limit arbitrarily selected from the above-listed upper limits; or within a range of more than or equal to, or more than any lower limit arbitrarily selected from the above-listed lower limits; or within a range of more than or equal to, or more than any lower limit arbitrarily selected from the above-listed lower limits while being less than or equal to, or less than any upper limit arbitrarily selected from the above-listed upper limits.

The lower limit of the ratio of the total mole number of the units A and B to the total mole number of all monomer units of the conductive polymer may be 50 mol%, 55 mol%, 60 mol%, 65 mol%, 70 mol%, 75 mol%, 80 mol%, 85 mol%, or 90 mol% or so, and the upper limit thereof may be 100 mol%, 95 mol%, 90 mol%, 85 mol%, 80 mol%, 75 mol%, 70 mol%, 65 mol%, or 60 mol% or so, relative to the mole number of all monomer units of the polythiophene. The ratio may be within a range of more than or equal to, or more than any lower limit arbitrarily selected from the above-listed lower limits; or within a range of more than or equal to, or more than any lower limit arbitrarily selected from the above-listed lower limits while being less than or equal to, or less than any upper limit arbitrarily selected from the above-listed upper limits.

The specific structure of the monomer included in the conductive polymer is not particularly limited, if it is a thiophene monomer having the long-chain hydrocarbon functional group and/or polar functional group as described above.

For example, the conductive polymer may contain a unit of Formula 2 below as the thiophene unit.

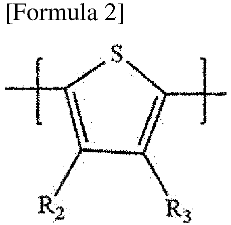

In Formula 2, R₂ and R₃ may each independently be hydrogen, the polar functional group, or the long-chain hydrocarbon functional group. In another example, R₂ and R₃ of Formula 2 may also be connected to each other to form a divalent functional group of Formula 3.

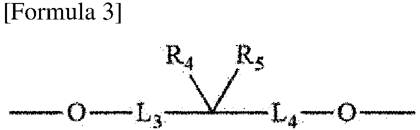

In Formula 3, L₃ and L₄ may each independently be a single bond, an alkylene group, or an alkylidene group, and R₄ and R₅ may each independently be hydrogen, the polar functional group, or the long-chain hydrocarbon functional group.

In Formula 2, when R₂ and R₃ are each independently hydrogen, a polar functional group, or a long-chain hydrocarbon functional group, at least one of R₂ and R₃ above may be the polar functional group or the long-chain hydrocarbon functional group.

In Formula 2, when R₂ and R₃ form the divalent functional group of Formula 3, at least one of R₄ and R₅ above may be the polar functional group or the long-chain hydrocarbon functional group.

In Formula 3, the meanings of the single bond, alkylene group, and alkylidene group, and specific examples are the same as in Formula 1.

The technical significance and specific examples of the long-chain hydrocarbon functional group and polar functional group in Formulas 2 and 3 are as described above.

The lower limit of the molar ratio of the unit of Formula 2 above based on all monomer units of the conductive polymer may be 50 mol%, 55 mol%, 60 mol%, 65 mol%, 70 mol%, 75 mol%, 80 mol%, 85 mol%, or 90 mol% or so, and the upper limit thereof may be 100 mol%, 95 mol%, 90 mol%, 85 mol%, 80 mol%, 75 mol%, 70 mol%, 65 mol%, or 60 mol% or so, relative to the mole number of all monomer units of the polythiophene. The ratio may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

In one example, the conductive polymer may contain a monomer unit represented by Formula 4 below. The monomer unit of Formula 4 may be one example of the monomer units having the first hydrocarbon functional group.

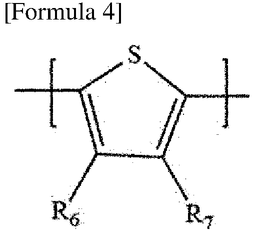

In Formula 4, R₆ and R₇ may each independently be hydrogen or the first hydrocarbon functional group. In this case, one or more of R₆ and R₇ above may be the first hydrocarbon functional group.

In another example, R₆ and R₇ above may be connected to each other to form a divalent functional group of Formula 5 below.

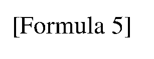

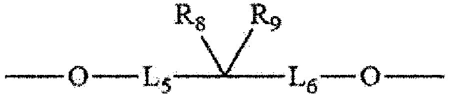

In Formula 5, L₅ and L₆ are each independently a single bond, an alkylene group, or an alkylidene group, and R₈ and R₉ are each independently hydrogen or the first hydrocarbon functional group, but at least one of R₈ and R₉ may be the first hydrocarbon functional group.

The specific details of the first hydrocarbon functional group are as described above, and the specific details of the single bond, alkylene group, or alkylidene group are as described in Formula 1 above.

The conductive polymer may also contain a monomer unit represented by Formula 6 below.

The monomer unit of Formula 6 above may be one example of the monomer units having the second hydrocarbon functional group.

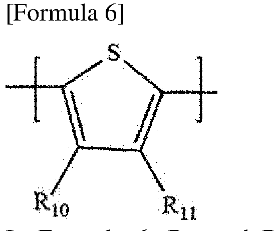

In Formula 6, R₁₀ and R₁₁ may each independently be hydrogen or the second hydrocarbon functional group, and in this case, one or more of R₁₀ and R₁₁ above may be the second hydrocarbon functional group.

In another example, R₁₀ and R₁₁ above may be connected to each other to form a divalent functional group of Formula 7 below.

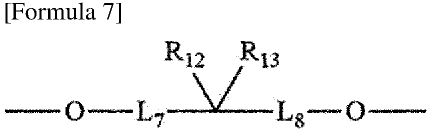

In Formula 7, L₇ and L₈ are each independently a single bond, an alkylene group, or an alkylidene group, and R₁₂ and R₁₃ are each independently hydrogen or the second hydrocarbon functional group, but at least one of R₁₂ and R₁₃ is the second hydrocarbon functional group.

The specific details of the second hydrocarbon functional group are as described above, and the specific details of the single bond, the alkylene group, and the alkylidene group are as described in Formula 1.

The conductive polymer may also contain a monomer unit represented by Formula 8 below. The monomer unit of Formula 8 may be one example of the monomer units having the polar functional group.

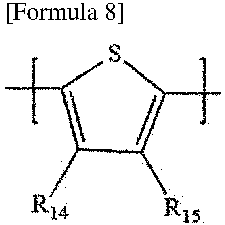

In Formula 8, R₁₄ and R₁₅ may each independently be hydrogen or the polar functional group. One or more of R₁₄ and R₁₅ above are the polar functional group.

In another example, R₁₄ and R₁₅ of Formula 8 above may be connected to each other to form a divalent functional group of Formula 9 below.

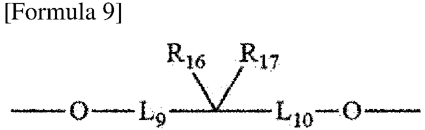

In Formula 9, L₉ and L₁₀ are each independently a single bond, an alkylene group, or an alkylidene group, and R₁₆ and R₁₇ are each independently hydrogen or the polar functional group, but at least one of R₁₆ and R₁₇ is the polar functional group.

The specific details of the polar functional group are as described above, and the specific details of the single bond, alkylene group, and alkylidene group are as described in Formula 1.

In the case where the conductive polymer simultaneously contains the monomer unit of Formula 4 above and the monomer unit of Formula 6 above, the ratio of the sum mole number of the monomer unit of Formula 4 above and the monomer unit of Formula 6 above to the mole number M of the total monomer units included in the conductive polymer may be adjusted within the same range as the molar ratio of the unit A as described above.

Furthermore, in the case, the ratio of the mole numbers of the monomer unit of Formula 4 above and the monomer unit of Formula 6 above may be adjusted within the same range as the ratio M1/M2 of the mole number as described above. At this time, the mole number M1 may be the mole number of the monomer unit of Formula 4 above, and the mole number M2 may be the mole number of the monomer unit of Formula 6 above.

When the conductive polymer contains the monomer unit of Formula 8 above, the unit may be included in a range which is within the range of the molar ratio M_{A}/M_{B} as described above. In this instance, the mole number of the monomer unit of Formula 8 above becomes the mole number M_{B}. In addition, the mole number M_{A} may be the mole number of the monomer unit of Formula 4 above, the mole number of the monomer unit of Formula 6 above, or the sum mole number of the monomer unit of Formula 4 above and the monomer unit of Formula 6 above.

When the monomer units of Formulas 4, 6 and 8 above are present in the conductive polymer, the lower limit of the ratio of the total mole number of the monomer units of Formulas 4, 6 and 8 above to the total mole number of all monomer units in the conductive polymer may be 50 mol%, 55 mol%, 60 mol%, 65 mol%, 70 mol%, 75 mol%, 80 mol%, 85 mol%, or 90 mol% or so, and the upper limit thereof may be 100 mol%, 95 mol%, 90 mol%, 85 mol%, 80 mol%, 75 mol%, 70 mol%, 65 mol%, or 60 mol% or so, relative to the mole number of all monomer units of the polythiophene. The ratio may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

The conductive polymer may further contain other monomer units, if the above-described units are included in the above ratios. The polymer layer comprises the conductive polymer, and accordingly, it is possible to exhibit the above-described properties.

The polymer layer may comprise only the conductive polymer, or may further comprise the conductive polymer and other necessary additives. In one example, the lower limit of the content of the conductive polymer in the polymer layer may be 50, 55, 60, 65, 70, 75, 80, 85, 90, or 95 or so, based on the total weight of the polymer layer, and the upper limit thereof may also be 100, 95, 90, 85, 80, 75, 70, 65, 60, 55, or 50 or so, based on the total weight of the polymer layer. The unit of the content is weight%. The range of the content may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

For example, the polymer layer may further comprise a conductive material together with the conductive polymer. As the conductive material, any material having appropriate conductivity may be used, and for example, as the conductive material, one, or two or more selected from carbon particles, carbon fibers, graphene, graphite, carbon black, carbon nanotubes, and metal particles, and the like may be used.

As the conductive material, an appropriate type may be selected and used from the above-described types, and the form of the material may be in the form of particles (spherical, irregular, or other shapes), plates, or fibers, and the like, but is not limited thereto.

The size of the conductive material may also be appropriately adjusted as needed. For example, the lower limit of the size of the conductive material may be 10 nm, 50 nm, 100 nm, 150 nm, 200 nm, 250 nm, 300 nm, 350 nm, 400 nm, 450 nm, 500 nm, 550 nm, 600 nm, 650 nm, 700 nm, 750 nm, 800 nm, 850 nm, 900 nm, 950 nm, 1000 nm, 5000 nm, or 10000 nm or so, and the upper limit thereof may also be 100000 nm, 90000 nm, 80000 nm, 70000 nm, 60000 nm, 50000 nm, 40000 nm, 30000 nm, 20000 nm, 10000 nm, 5000 nm, 1000 nm, 950 nm, 900 nm, 850 nm, 800 nm, 750 nm, 700 nm, 650 nm, 600 nm, 550 nm, 500 nm, 450 nm, 400 nm, 350 nm, 300 nm, 250 nm, 200 nm, 200 nm, or 150 nm or so. The size may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

When the conductive material is in the form of particles, the size may be the average particle diameter (so-called D50 particle diameter); when it is in the form of plates, it may be the thickness, long side, or cross-section; and when it is in the form of fibers, it may be the diameter or length of the cross-section.

When the conductive material is in the form of fibers, the lower limit of the aspect ratio (length/cross-sectional diameter) may be 5, 10, 15, 20, 25, 30, 35, 40, 45, 50, 55, 60, or 65 or so, and the upper limit thereof may be 200, 195, 190, 185, 180, 175, 170, 165, 160, 155, 150, 145, 140, 135, 130, 125, 120, 115, 110, 105, 100, 95, 90, 85, 80, 75, or 70 or so. The aspect ratio may be within a range of more than or equal to, or more than any lower limit arbitrarily selected from the above-listed lower limits; or within a range of less than, or equal to or less than any upper limit arbitrarily selected from the above-listed upper limits; or within a range of less than or equal to, or less than any upper limit arbitrarily selected from the above-listed upper limits simultaneously while being more than or equal to, or more than any lower limit arbitrarily selected from the above-listed lower limits.

If necessary, the conductive material may be surface-treated in consideration of dispersibility, and the like.

In this case, a conductive core and a surface layer present on the surface of the core may be included. In this case, the conductive material, which is one, or two or more selected from the carbon particles, carbon fibers, graphene, graphite, carbon black, carbon nanotubes, and metal particles, and the like, becomes the conductive core.

A surface-treating agent having appropriate compatibility with the conductive polymer may be used as the surface-treating agent. For example, the conductive material may be surface-treated with a polyphenol-based compound as the surface-treating agent. In this case, the surface layer may comprise the polyphenol-based compound. The polyphenol-based compound means a compound including a structure containing two or more hydroxy groups which are substituted in benzene, and connected thereto. Such a compound may be exemplified by a so-called catechol compound (i.e., catechol, or compound including the relevant structure), and an example thereof includes dopamine, polydopamine, 3,4-dihydroxy phenyl alanine, norepinephrine, tannic acid, humic acid, and/or lignin, and the like, but is not limited thereto.

The method of surface-treating the conductive material with the surface-treating agent is not limited, and for example, a method of mixing the conductive material and the surface-treating agent in an appropriate solvent, and the like, or a method of synthesizing or polymerizing the surface-treating agent on the surface of the conductive material may be applied.

When the conductive material is used, the ratio of the conductive material within the polymer layer may be adjusted depending on the purpose. For example, the lower limit of the weight ratio (parts by weight) of the conductive material in the polymer layer may be 0.1 parts by weight, 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 10 parts by weight, 11 parts by weight, 12 parts by weight, 13 parts by weight, 14 parts by weight, 15 parts by weight, 16 parts by weight, 17 parts by weight, 18 parts by weight, 19 parts by weight, 20 parts by weight, 25 parts by weight, 30 parts by weight, 40 parts by weight, 50 parts by weight, 60 parts by weight, or 65 parts by weight or so, relative to 100 parts by weight of the conductive polymer, and the upper limit thereof may be 1,000 parts by weight, 800 parts by weight, 600 parts by weight, 400 parts by weight, 350 parts by weight, 300 parts by weight, 250 parts by weight, 200 parts by weight, 150 parts by weight, 100 parts by weight, 90 parts by weight, 80 parts by weight, 70 parts by weight, 60 parts by weight, 50 parts by weight, 45 parts by weight, 40 parts by weight, 35 parts by weight, 30 parts by weight, 25 parts by weight, 20 parts by weight, or 15 parts by weight or so. The content may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits simultaneously while being more than or equal to, or more than any lower limit arbitrarily selected from the above-listed lower limits.

Under such a ratio, the conductive material appropriately interacts with the conductive polymer, thereby enabling a polymer layer in a desired shape to be effectively formable.

The polymer layer may be manufactured in the following manner. For example, a method for manufacturing the polymer layer may comprise a step of forming a polymer layer using a polymer solution comprising the conductive polymer and, if necessary, the conductive material. Furthermore, the method may comprise, for example, a first step of forming a polymer layer precursor comprising the conductive polymer and the conductive material, and a step of heat-treating the polymer layer precursor.

As the conductive polymer and conductive material used for forming the polymer layer precursor, the conductive polymer and conductive material as described above may be used. The conductive polymer, and the like may be produced by a known method, or the obtained commercially available product may be used. For example, as the method for producing polythiophene, a method of using an oxidation polymerization reaction, a method of using a radical reaction, or the like is known, where such a method may also be applied to the process of forming the conductive polymer in the present application. In addition, a commercially available product may also be used as the conductive material, and its surface treatment may also be performed in a known manner.

The polymer layer precursor is, for example, a layer comprising the conductive polymer and conductive particles, which ultimately means a layer converted into the polymer layer.

Such a precursor may be formed in a known manner, and for example, it may be formed in a manner of coating a polymer solution in which the conductive polymer, and the like are dispersed in an appropriate solvent.

Here, as the solvent, an appropriate solvent capable of dispersing the conductive polymer and the conductive material may be selected, and for example, an ether-based solvent such as diethyl ether, tetrahydrofuran, dioxane, trioxane, dimethoxy ethane, or toluene; an aromatic hydrocarbon-based solvent such as ethyl benzene, or an alicyclic hydrocarbon solvent such as cyclohexane; or a tertiary amine-based solvent such as tetramethylethylenediamine (TMEDA) or hexamethylphosphorictriamide (HMPA), or the like may be used, or a mixed solvent including two or more of the foregoing, and the like may be used, but is not limited thereto.

In the step, the lower limit of the concentration of the conductive polymer present in the polymer solution may be 0.5 weight%, 1 weight%, 1.5 weight%, 2 weight%, 2.5 weight%, or 3 weight% or so, and the upper limit thereof may be 20 weight%, 18 weight%, 16 weight%, 14 weight%, 12 weight%, 10 weight%, 9 weight%, 8 weight%, 7 weight%, 6 weight%, 5 weight%, 4 weight%, or 3 weight% or so. The ratio may be within a range of more than or equal to, or more than any lower limit arbitrarily selected from the above-listed lower limits, or within a range of less than, or equal to or less than any upper limit arbitrarily selected from the above-listed upper limits, or within a range of more than or equal to, or more than any lower limit arbitrarily selected from the above-listed lower limits while being less than, or equal to or less than any upper limit arbitrarily selected from the above-listed upper limits. Such a concentration may be changed as needed.

The polymer solution is used to form a polymer layer precursor. This process may usually be performed through a process of coating the polymer solution on an appropriate process base material. In this instance, the coating method is not particularly limited.

The manufacturing method further comprises a step of heat-treating the precursor of the polymer layer. By adjusting the conditions in this process, the orientation state of the conductive polymer (e.g., orientation state of the long-chain hydrocarbon functional group and/or polar functional group) and/or the dispersion state of the conductive material is adjusted or stabilized, whereby it is possible to form a polymer layer satisfying the intended PTC effect, oxidation potential characteristics, and other characteristics.

The polymer solution is used to form a polymer layer on a current collector. This process typically comprises steps of coating the polymer solution onto a current collector and heat-treating the coated coating solution, such as drying or annealing it. During this process, the crystallinity of the conductive polymer can also be controlled by the heat-treating conditions.

The heat-treating step may be performed in two steps. For example, the heat-treating step may comprise a second step of primarily heat-treating the precursor of the first step at a temperature range T₁; and a third step of secondarily heat-treating the precursor at a temperature range T₂, following the second step.

For accomplishment of the orientation or alignment of the desired conductive polymer and the dispersion state of the conductive material, the conditions of the second and third steps may be adjusted.

For example, the temperature range T₁ of the primary heat treatment may be adjusted within a predetermined range. For example, the lower limit of the temperature range T₁ may be 50°C, 55°C, 60°C, 65°C, 70°C, 75°C, 80°C, 85°C, 90°C, 95°C, 100°C, 105°C, 110°C, 115°C, 120°C, 125°C, 130°C, 135°C, or 140°C or so, and the upper limit thereof may be 300°C, 290°C, 280°C, 270°C, 260°C, 250°C, 240°C, 230°C, 220°C, 210°C, 200°C, 190°C, 180°C, 170°C, 160°C, 150°C, or 140°C or so. The temperature range T₁ may be within a range of more than or equal to, or more than any lower limit arbitrarily selected from the above-listed lower limits; or within a range of less than or equal to, or less than any upper limit arbitrarily selected from the above-listed upper limits while being more than or equal to, or more than any lower limit arbitrarily selected from the above-listed lower limits.

In the heat-treating step, the temperature range T₁ of the primary heat treatment and the temperature range T₂ of the secondary heat treatment may be adjusted. For example, the lower limit of the ratio (T₁/T₂) of the temperature ranges T₁ and T₂ may be 0.1, 0.2, 0.3, 0.4, 0.5, 0.6, 0.7, 0.8, 0.9, or 1 or so, and the upper limit thereof may be 10, 8, 6, 5, 4.5, 4, 3.5, 3, 2.5, 2, 1.9, 1.8, 1.7, 1.6, 1.5, 1.4, 1.3, 1.2, or 1.1 or so. The ratio may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

In one example, the temperature range T₁ of the primary heat treatment in the heat-treating step may be adjusted to be higher than the temperature range T₂ of the secondary heat treatment.

The ratio of the heat treatment time Q₁ in the primary heat treatment and the heat treatment time Q₂ in the secondary heat treatment may be further adjusted. For example, the lower limit of the ratio Q₂/Q₁ may be 1, 2, 3, 4, 5, 6, 7, 8, 9, 10, 11, 12, 13, 14, 15, 20, 50, 100, 150, 200, or 250j or so, and the upper limit thereof may be 1,000, 800, 600, 400, 300, 280, 250, 200, 150, 100, 90, 80, 70, 60, 50, 40, 30, 20, 19, 18, 17, 16, or 15 or so. The ratio Q₂/Q₁ may be within a range of more than or equal to, or more than any lower limit arbitrarily selected from the above-listed lower limits; or within a range of less than, or equal to or less than any upper limit arbitrarily selected from the above-listed upper limits; or within a range of less than, or equal to or less than any upper limit arbitrarily selected from the above-listed upper limits while being more than or equal to, or more than any lower limit arbitrarily selected from the above-listed lower limits.

The lower limit of the secondary heat treatment time Q₂ may be 0.1 hours, 0.2 hours, 0.3 hours, 0.4 hours, 0.5 hours, 0.6 hours, 0.7 hours, 0.8 hours, 0.9 hours, 1 hour, 2 hours, 3 hours, 4 hours, 5 hours, 6 hours, 7 hours, 8 hours, 9 hours, 10 hours, 11 hours, 12 hours, 13 hours, 14 hours, 15 hours, 16 hours, 17 hours, or 18 hours or so, and the upper limit thereof may be 50 hours, 48 hours, 46 hours, 44 hours, 42 hours, 40 hours, 38 hours, 36 hours, 34 hours, 32 hours, 30 hours, 28 hours, 26 hours, 24 hours, 22 hours, 20 hours, 18 hours, 15 hours, 10 hours, 9 hours, 8 hours, 7 hours, 6 hours, 5 hours, 4 hours, 3 hours, 2 hours, 1.5 hours, or 1 hour or so. The secondary heat treatment time Q₂ may be within a range of more than or equal to, or more than any lower limit arbitrarily selected from the above-listed lower limits; or within a range of less than or equal to, or less than any upper limit arbitrarily selected from the above-listed upper limits; or within a range of less than or equal to, or less than any upper limit arbitrarily selected from the above-listed upper limits while being more than or equal to, or more than any lower limit arbitrarily selected from the above-listed lower limits.

The polymer layer may be formed through the above processes.

Through this heat treatment process, the orientation state of the conductive polymer (e.g., orientation state of the long-chain hydrocarbon functional group and/or polar functional group) and/or the dispersion state of the conductive material is adjusted or stabilized, whereby it is possible to form a polymer layer satisfying the intended PTC effect, oxidation potential characteristics, and other characteristics.

For example, the electrode (positive electrode or negative electrode) may be obtained by forming a desired polymer layer on a current collector through the above process, and then forming an active material layer on the polymer layer using a usual method.

As the active material layer used to form the electrode, a commonly applied layer may also be used.

Typically, the active material layer comprises an electrode active material. The specific type of the electrode active material is not particularly limited, and materials to form a positive electrode or a negative electrode may usually be used.

For example, when the active material layer is a positive electrode active material layer, the electrode active material may include layered compounds such as lithium cobalt oxide (LiCoO₂) or lithium nickel oxide (LiNiO₂), or compounds substituted with one or more transition metals; lithium iron oxides such as LiFe₃O₄; lithium manganese oxides such as Formula Li_{1+c1}Mn_{2-c1}O₄ (0≤c1≤0.33), LiMnO₃, LiMn₂O₃, or LiMnO₂; lithium copper oxides (Li₂CuO₂); vanadium oxides such as LiV₃O₈, V₂O₅, or Cu₂V₂O₇; Ni-site lithium nickel oxides represented by Formula LiNi_{1-c2}M_{c2}O₂ (where M is at least one selected from the group consisting of Co, Mn, Al, Cu, Fe, Mg, B and Ga, and 0.01≤c2≤0.3 is satisfied); lithium manganese composite oxides represented by Formula LiMn_{2-c3}M_{c3}O₂ (where M is at least one selected from the group consisting of Co, Ni, Fe, Cr, Zn, and Ta, and 0.01≤c3≤0.1 is satisfied) or Li₂Mn₃MO₈ (here, M is at least one selected from the group consisting of Fe, Co, Ni, Cu and Zn); lithium nickel cobalt manganese (NCM) composite oxides, lithium nickel cobalt manganese aluminum (NCMA) composite oxides, and LiMn₂O₄ in which a part of Li in the formula is substituted with alkaline earth metal ions, and the like, but is not limited thereto.

When the active material layer is a negative electrode active material layer, as the electrode active material, for example, a compound capable of reversible intercalation and deintercalation of lithium may be used. A specific example may include carbonaceous materials such as artificial graphite, natural graphite, graphitized carbon fiber, and amorphous carbon; metallic compounds capable of alloying with lithium, such as Si, Al, Sn, Pb, Zn, Bi, In, Mg, Ga, Cd, Si alloy, Sn alloy, or Al alloy; metal oxides capable of doping and de-doping lithium, such as SiOₐ (0 < a < 2), SnO₂, vanadium oxide, and lithium vanadium oxide; or a composite comprising the metallic compound and the carbonaceous materials such as a Si-C composite or a Sn-C composite, and the like, and any one or a mixture of two or more of the foregoing may be used.

A metal lithium thin film may also be used as the negative electrode active material, and as the carbon material, low crystalline carbon and high crystalline carbon, and the like may also be used. As the low crystalline carbon, soft carbon and hard carbon are representative, and as the high crystalline carbon, high-temperature baked carbons such as amorphous, plate-like, scale-like, spherical, or fibrous natural graphite or artificial graphite, Kish graphite, pyrolytic carbon, mesophase pitch based carbon fiber, mesocarbon microbeads, mesophase pitches, and petroleum and coal tar pitch derived cokes are representative.

The electrode active material may be included in the active material layer within a range of about 80 weight% to 99.5 weight%, or within a range of 88 weight% to 99 weight%, relative to the total weight of the active material layer, but the ratio may be changed depending on the use or design of the electrode.

The active material layer may further comprise a binder. The binder serves to improve attachment between the active materials, and adhesive force on between the active material layer and the current collector. An example of the binder is not particularly limited, and one or more may be selected from the group consisting of, for example, PVDF (poly(vinylidene fluoride), PVA (poly(vinyl alcohol)), SBR (styrene butadiene rubber), PEO (poly(ethylene oxide)), CMC (carboxyl methyl cellulose), cellulose acetate, cellulose acetate butylate, cellulose acetate propionate, cyanoethylpullulan, cyanoethyl polyvinyl alcohol, cyanoethyl cellulose, cyanoethyl sucrose, pullulan, polymethylmethacrylate, polybutylacrylate, polyacrylonitrile, polyvinylpyrrolidone, polyvinylacetate, an ethylene vinyl acetate copolymer (polyethylene-co-vinyl acetate), and polyarylate, and used.

In one example, the binder may be included in the active material layer within a range of 0.1 parts by weight to 10 parts by weight or 0.5 parts by weight to 5 parts by weight, relative to 100 parts by weight of the electrode active material, but is not limited thereto.

The active material layer may further comprise a conductive material, as needed. If the conductive material has conductivity without causing chemical changes in the secondary battery, it is not particularly limited, any known material can be used. For example, graphite such as natural graphite or artificial graphite; carbon black, such as carbon black, acetylene black, Ketjen black, channel black, furnace black, lamp black, or thermal black; conductive fibers such as carbon fibers or metal fibers; conductive tubes such as carbon nanotubes (CNTs); metal powders such as fluorocarbon, aluminum, or nickel powder; conductive whiskers such as zinc oxide or potassium titanate; conductive metal oxides such as titanium oxide; conductive materials such as polyphenylene derivatives, and the like may be used.

In one example, the conductive material may be included in the active material layer in an amount of 0.1 parts by weight to 20 parts by weight or 0.3 parts by weight to 10 parts by weight, relative to 100 parts by weight of the electrode active material, but is not limited thereto.

The active material layer may also further comprise any necessary known components in addition to the above-described components optionally.

The method for forming the active material layer on the polymer layer to manufacture an electrode is not particularly limited. Typically, the active material layer is formed by coating a slurry containing the electrode active material, a binder, and a conductive material, and the like on the current collector (on the polymer layer), drying, and then rolling, and such a known method may also be applied thereto in the same manner.

Such an electrode may comprise: the current collector; a conductive polymer layer and an active material layer sequentially.

As described above, the conductive polymer layer can have a uniform and stable thickness through its excellent coating properties.

Therefore, the active material layer in the electrode does not include protrusions at the ends even before rolling. For example, the active material layer in the electrode comprises a sliding region. When the active material layer is formed using an electrode slurry, the sliding region is a region where the thickness of the active material layer increases along the coating direction at and near the coating start portion due to viscosity characteristics of the slurry, and a region where the thickness of the active material layer decreases along the coating direction at and near the coating end time point.

This sliding region is a phenomenon that commonly occurs during the electrode manufacturing process. For example, as exemplarily illustrated in Figure 4, for electrode manufacturing, the conductive polymer layer (200) is formed on a current collector (100), and an active material layer (300) is formed by coating the electrode slurry thereon. In this case, assuming that the coating direction is a direction from left to right in Figure 4, a sliding region (S) where the thickness of the active material layer (300) increases from the coating start time point to a certain region occurs, and after passing a certain degree, a region (N) with a stabilized thickness appears, and then a sliding region (S) where the thickness decreases again occurs in a certain region (3002).

However, when a protrusion occurs within the sliding region (S), a problem arises in the subsequent electrode manufacturing process. The protrusion is a region between the start and end portions (in the case of Figure 4; 3001, 3002) of the sliding region (S), excluding the regions (in the case of Figure 4; 3001, 3002), which means a portion formed to be thicker than the start and end portions (in the case of Figure 4; 3001, 3002).

If such a protrusion is present, a problem arises in the subsequent rolling process of the active material layer.

Since the conductive polymer layer is formed with a stable and uniform thickness, the maximum thickness in the thickness profile of the sliding region is identified at the end point of the sliding region. In this instance, the end point of the sliding region means a thicker point of the start and end portions (in the case of Figure 4; 3001, 3002) in the sliding region (S).

Even when the active material layer is an unrolled active material layer, i.e., an active material layer prior to rolling, it does not include the protrusions at the ends. If the rolling s performed, there is a possibility to eliminate any protrusions even though there are some protrusions, but during this process, damage to the current collector, and the like can occur, or uneven rolling can be performed. The active material layer of the electrode is free of protrusions in an unrolled state, so that the rolling process can also proceed efficiently. Such an active material layer can be included into the electrode assembly after the rolling process.

The conductive polymer layer of the electrode may be a conductive polymer layer which is not surface-treated. That is, even when the active material layer is formed in a state without performing surface treatment such as corona treatment or plasma treatment on the conductive polymer layer, it is possible to form a sliding region without any protrusion.

The electrode assembly may be formed using the positive and negative electrodes formed in the above manner and the above-described separator.

The present specification also discloses an electrochemical element, such as a secondary battery, comprising the electrode assembly. The electrochemical element is not particularly limited in terms of other components or manufacturing methods, if the electrode assembly is used, and known methods may be applied.

### Advantageous Effects

The present specification discloses an electrode assembly and a secondary battery. The present specification discloses an electrode assembly formed by combining: an electrode capable of exhibiting low resistance and excellent electrical characteristics in a normal state of a secondary battery, and securing stability by being rapidly converted into an insulator in an abnormal state thereof; and a separator which is referred to as a so-called SRS (safety-reinforcing separator). The present specification also discloses a secondary battery comprising the electrode assembly.

### Description of Drawings

Figure 1 is a side view of an exemplary electrode assembly.
Figure 2 is a side view of an exemplary separator.
Figure 3 is a side view of an exemplary electrode.
Figure 4 is a cross-sectional diagram of an electrode for explaining a sliding region.
Figure 5 is an NMR analysis result of a compound manufactured in a preparation example.
Figure 6 is an SEM image of the electrode of an example.
Figure 7 is a thickness profile of a sliding region in an active material layer of an electrode.
Figure 8 is analysis results for a coin half-cell of Test Example 1.
Figure 9 is charge and discharge profiles of cycle tests of Test Example 1.
Figure 10 is energy density retention (140 cycles) results of Test Example 1.
Figure 11 is rate test results of a 3-Ah pouch cell of Test Example 1.
Figure 12 is cycle test results of a 3-Ah pouch cell of Test Example 1.
Figure 13 is a diagram for explaining a method of performing an impact test.
Figure 14 is a view showing a maximum temperature and temperature rise rates in an impact test.

### Mode for Invention

Hereinafter, the contents of the electrode assembly are described in detail through examples and comparative examples, but the scope of the electrode assembly, and the like is not limited by the following examples.

### 1. NMR analysis method

¹H-NMR analyses were performed at room temperature (25°C) using an NMR spectrometer (including a Bruker UltraShield spectrometer (300 MHz)) with a 5 mm triple resonance probe. A sample was diluted in a solvent (CDCl₃) for NMR measurement to a concentration of about 10 mg/ml or so and used, and the chemical shift was expressed in ppm.

### 2. GPC (Gel Permeation Chromatograph)

Molecular weight characteristics were measured using GPC (Gel permeation chromatography). A sample is placed in a 5 mL vial and diluted with chloroform to a concentration of 1 mg/mL or so. The standard sample for calibration and an analytical sample were filtered through a syringe filter (pore size: 0.45 µm), and then the measurement was performed. As the analysis program, Waters' Empower 3 was used, and a weight average molecular weight (Mw) and a number average molecular weight (Mn) were each obtained by comparing the elution time of the sample with the calibration curve. The molecular weight distribution (PDI) is equivalent to a value Mw/Mn obtained by dividing the weight-average molecular weight Mw by the number-average molecular weight Mn. The GPC measurement conditions are as follows.

### <GPC measurement conditions>

Instrument: Waters' 2414
Column: using 3 Styragels from Waters
Solvent: THF (tetrahydrofuran)
Column temperature: 35°C
Sample concentration: 1 mg/mL, 1 µL injection
Standard sample: polystyrene (Mp: 3900000, 723000, 316500, 52200, 31400, 7200, 3940, 485)

### 3. Thickness measurement

A thickness of a polymer layer was identified using KEYENCE's VK-X series confocal laser microscope. An aluminum foil on which the polymer layer was formed was cut so that a width and a length were each 3 cm, thereby preparing a specimen, and about half of the polymer layer was removed from the specimen with acetone to expose the lower aluminum foil. The aluminum foil side of the specimen, where the polymer layer was not formed, was pressed against a flat plate, and measurement was started. An area where a width and a length were each 100 µm was observed under the microscope, but the polymer layer and the exposed aluminum foil of the specimen were each adjusted to be positioned about halfway within the observation area, and a 3D scan was performed. An average value P of heights was measured by optionally designating 10 points from the polymer layer within the observation area, and an average value A was obtained by measuring the heights optionally at 10 points on the aluminum foil, and then the value obtained by subtracting the average value A from the average value P was used as the thickness of the polymer layer.

### 4. AC impedance resistance measurement at 3V and 3.5V

### Sample manufacturing

A polymer layer was formed on a 15 µm-thick aluminum foil (Al Foil). The formation method and thickness of the polymer layer were the same as those described in each of examples and comparative examples. Thereafter, a separator and a lithium film were laminated on the polymer layer to manufacture a laminate in which the Al Foil/polymer layer/separator/lithium film were laminated, and the laminate was punched into a circular shape with a diameter of about 1.4 cm. A coin cell was manufactured using the circularly punched laminate and an electrolyte (using Wellcos' CR2032 coin cell kit), and impedance was measured for this coin cell. As the separator, LG Energy Solution's SRS (safety-reinforcing separator) is used. The SRS is a separator in which an inorganic particle layer including PVDF-HFP (poly(vinylidene fluoride-co-hexafluoropropylene)) and Al₂O₃ is formed on a polymer membrane (polyethylene separator) (a porosity degree of about 45%), and the weight ratio (PVdF-HFP: Al₂O₃) of PVDF-HFP and Al₂O₃ is about 1:4 or so. As the lithium film, a lithium film with a thickness of 300 µm or so was used, and as the electrolyte, Enchem's product (1M LiPF₆ solution (solvent: EC/DMC/EMC=3/4/3 (mass ratio), EC: ethylene carbonate, DMC: dimethyl carbonate, EMC: ethylmethyl carbonate)) was used.

### External voltage 3V condition

For the coin cell, AC impedance resistance was measured in an EIS (Electrochemical Impedance Spectronization) manner. A voltage of 3V was applied to the coin cell at room temperature (25°C) for 10 minutes, and the interface resistance R_{3V} was measured, which was obtained in the high-frequency region of a Nyquist plot obtained using the EIS measurement method in a range of 50,000 Hz to 0.1 Hz. A potentiostat (Princeton Applied Research, PARASTAT-MC) was used as the EIS measurement device.

### External voltage 3.5V condition

The external voltage applied to the coin cell for which the resistance R_{3V} was measured was converted to 3.5V, and after 1 second, the AC impedance resistance R_{3.5V} was measured in the same manner.

### 5. AC impedance resistance measurement at room temperature (25°C) and 130°C

AC impedance resistance was measured using the same coin cell used in "4. AC impedance resistance measurement at 3V and 3.5V." For the coin cell, AC impedance resistance was measured in an EIS (Electrochemical Impedance Spectronization manner. Specifically, the interface resistance was measured, which was obtained in a high-frequency region of a Nyquist plot obtained by the EIS measurement method in a range of 50,000 Hz to 0.1 Hz. A potentiostat (manufacturer: Princeton Applied Research, product name: PARASTAT-MC) was used as the EIS measurement device.

A voltage of 4.5 V was applied to the coin cell at room temperature (25°C) for 10 minutes to maintain the doping state of the conductive polymer, and then the AC impedance resistance R₂₅ was measured after about 1 minute in a state where the external voltage was set to 0V (open circuit voltage). The measured value was evaluated as the AC impedance resistance R₂₅ of the polymer layer at room temperature (25°C).

Separately, the coin cell was placed in the center of a convection oven (Jeotech, OF3-05W), and the oven was set to a final temperature of 130°C. The coin cell was connected to a potentiostat (Princeton Applied Research, PARASTAT-MC) outside the oven to enable EIS resistance measurement. The external voltage was maintained at 0V (open circuit voltage). The AC impedance resistance R₁₃₀ of the polymer layer at 130°C was evaluated in the above state.

### 6. Average particle diameter

An average particle diameter (D50 particle diameter) of conductive particles was measured using Marvern's MASTERSIZER3000 device in accordance with ISO-13320 standard. Toluene was used as a solvent upon measurement. If the sample (conductive particles) is dispersed in the solvent and irradiated with lasers, the lasers are scattered by the sample dispersed in the solvent. Since strengths and directionality of the scattered lasers vary depending on the particle size, the average particle diameter can be obtained by analyzing them using Mie theory. Through the analysis, the measurement results were converted to the particle diameters of spheres with the same volume as the dispersed sample, thereby resulting in a volume-based cumulative graph of the particle size distribution, and the particle diameter (median particle diameter) at 50% cumulative point in the graph was designated as the average particle diameter (D50 particle diameter).

### 7. Arithmetic mean roughness Ra

Arithmetic mean roughness Ra was measured using KEYENCE's VK-X series confocal laser microscope. An aluminum foil coated with a polymer layer was cut so that a width and a length were each 3 cm to prepare a specimen. The surface of the aluminum foil of the specimen, in which the polymer layer was not formed, was pressed against a flat plate and 3D scan was performed.

The region of the polymer layer, where a width and a length were each 100µm was 3D scanned. After arbitrarily designating a region where a width and a length were each 50µm within the 3D scanned region, the arithmetic mean roughness Ra was measured using the 3D scan image.

### 8. Scratch resistance

A surface of a polymer layer was rubbed back and forth 10 times using dust-free fabric (Hansong Wiper MIRACLEAN322 Polyester) at a load of 100 g and a speed of 27 rpm. If scratches were confirmed upon observation with the naked eye, it was evaluated as X, and if no scratches were observed upon observation with the naked eye, it was evaluated as O.

### Preparation Example 1. Polydopamine-coated conductive particles

Carbon black particles (IMERYS, C-NERGY^{™} SUPER C65) were used as the conductive particles. The average particle diameter (D50 particle diameter) of the conductive particles was about 60 nm or so.

DHC (dopamine hydrochloride) (CAS No. 62-31-7) was added to a buffer solution and stirred at room temperature (about 25°C). Here, as the buffer solution, BIOSESANG's 0.1M pH 8.5 Tris-buffer product was used. The molar concentration of DHC in the final solution was about 2 mg/mL or so. The conductive particles were dispersed (sonication for 1 hour) in the mixture of the buffer solution and DHC at a concentration of about 4 mg/mL, and stirred for additionally about 18 hours to form a coating layer of polydopamine on the conductive particles. After filtering under reduced pressure using a paper filter, the resultant particles were vacuum-dried to obtain conductive particles coated with polydopamine.

### Preparation Example 2. Synthesis of monomer (A)

The monomer of the following Formula A was synthesized in the following manner.

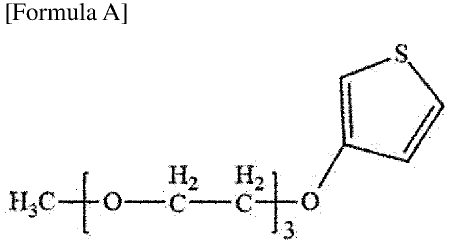

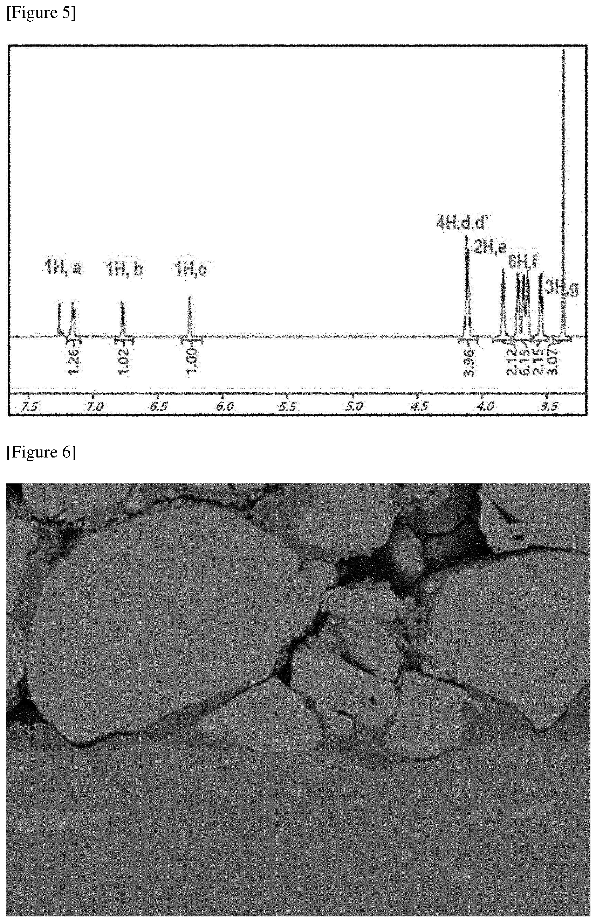

1.372 g (12.02 mmol, 1 eq) of 3-methoxythiophene and 3 g (16.83 mmol, 1.4 eq) of triethylene glycol monomethyl ether were dissolved in 100 ml of toluene together with 230 mg of p-toluenesulfonic acid (p-TsOH), and mixed. The mixture was refluxed at 120°C, and simultaneously reacted, whereby methanol produced by the reaction (transetherification) was removed by a 4A type molecular sieve filled in an extractor (soxhlet extractor). The reactant was refluxed for 24 hours, and then quenched with water, extracted with ethyl acetate, and then washed with brine, and dried over magnesium sulfate (MgSO₄). The solvent was removed by a rotary evaporator, and the residue was purified by column chromatography eluting with methylene chloride/hexane (2:1) to obtain the target compound (monomer (A)). The NMR analysis results for the target compound (monomer (A)) are as shown in Figure 5.

### Preparation Example 3. Synthesis of polythiophene (A)

A conductive polymer was prepared by polymerizing 3-dodecylthiophene (3-DT), 3-hexylthiophene (3-octylthiophene) (3-HT), and the monomer (A) of Formula A of Preparation Example 2. To a solution in which 3.20 g (19.71 mmol, 3 eq) of iron (III) chloride was dissolved in 150mL of methylene chloride, 0.787 g (3.12 mmol, 0.475 eq) of 3-dodecylthiophene, 0.525 g (3.12 mmol, 0.475 eq) of 3-hexylthiophene, and 0.083 g (0.3285 mmol, 0.05 eq) of the monomer (A) of Preparation Example 2 were introduced, and polymerized at 25°C for 24 hours to produce polythiophene (A). The polymerization solution was placed in an osmosis membrane with an MWCO (molecular weight cut-off) of 5,000, and then immersed in 200ml of an acetonitrile solvent to remove unreacted iron (III) chloride, monomers, and low-molecular-weight oligomers. The residue precipitated inside the osmosis membrane was washed with methanol, and dried at 60°C for 12 hours to produce polythiophene (A). The weight-average molecular weight (Mw) and number-average molecular weight (Mn) of polythiophene (A) were 150,000 g/mol and 50,000 g/mol, respectively.

### Preparation Example 4. Synthesis of polythiophene (B)

A conductive polymer was prepared by polymerizing 3-dodecylthiophene (3-DT), 3-octylthiophene (3-OT), and the monomer (A) of Formula A of Preparation Example 2. To a solution in which 3.20 g (19.71 mmol, 3 eq) of iron (III) chloride was dissolved in 150ml of methylene chloride, 0.79 g (3.135 mmol, 0.475 eq) of 3-dodecylthiophene, 0.62 g (3.315 mmol, 0.475 eq) of 3-octylthiophene, and 0.081 g (0.33 mmol, 0.05 eq) of the monomer (A) of Preparation Example 2 were introduced, and polymerized at 25°C for 24 hours to produce polythiophene (B). The polymerization solution was placed in an osmosis membrane with an MWCO (molecular weight of cut-off) of 5000, and then immersed in 200ml of an acetonitrile solvent to remove unreacted iron (III) chloride, monomers, and low-molecular-weight oligomers. The residue precipitated inside the osmosis membrane was washed with methanol, and dried at 60°C for 12 hours to produce polythiophene (B). The weight-average molecular weight (Mw) and number-average molecular weight (Mn) of polythiophene (B) were 51,200 g/mol and 13,400 g/mol, respectively.

### Example 1.

### Formation of polymer layer

A mixture prepared by mixing the polythiophene (A) of Preparation Example 3 and the polydopamine-coated conductive material particles (P) of Preparation Example 1 in a weight ratio of 8:2 (A: P) was dispersed in toluene at a concentration of about 4 weight% to prepare a polymer solution. Upon the preparation of the polymer solution, the mixture was dispersed using an ultrasonic disperser at a temperature of about 30°C for about 4 hours. The polymer solution was coated onto a current collector using a Meyer bar and dried in a drying oven at about 140°C for about 4 minutes or so (primary heat treatment). Thereafter, the current collector coated with the polymer solution was placed in an oven and dried at 110°C for about 18 hours or so (secondary heat treatment) to form a layer (polymer layer) with a thickness of about 400 nm. As the current collector, an Al foil with a thickness of about 15 µm or so was used.

### Manufacture of electrodes and electrode assembly

An active material layer was formed on the polymer layer to manufacture an electrode. A slurry containing lithium cobalt oxide (LiCoO₂), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 77.5:1:1:20.5 (LiCoO₂: conductive material: PVDF: NMP) was applied onto the polymer layer using a doctor blade, and dried for 30 minutes under a condition of 130°C to form the active material layer (slurry loading amount: about 16 mg/cm²). The active material layer of the electrode was rolled to a porosity of about 18% or so to form an active material layer with a thickness of about 58 µm or so, thereby manufacturing an electrode. Figure 6 is an SEM image of the electrode. The electrode was used as a positive electrode, and laminated with a separator and a negative electrode to manufacture an electrode assembly. The electrode assembly was manufactured by sequentially laminating the positive electrode, separator, and negative electrode, where the separator (SRS) used in "4. AC impedance resistance measurement at 3V and 3.5V" above was used as the separator, and a graphite negative electrode was used as the negative electrode.

### Example 2.

A polymer layer was formed in the same manner as in Example 1, except that upon preparing the polymer solution, the polythiophene (A) of Preparation Example 3 and the polydopamine-coated conductive material particles (P) of Preparation Example 1 were mixed in a weight ratio of 6:4 (A: P), and an electrode and an electrode assembly were manufactured using the same.

### Example 3.

A polymer layer was formed in the same manner as in Example 1, except that upon preparing the polymer solution, the polythiophene (B) of Preparation Example 4 was used instead of the polythiophene (A) of Preparation Example 3, and an electrode and an electrode assembly were manufactured using the same. In this instance, upon the secondary heat treatment, the temperature was set to 130°C and the time was set to 60 minutes.

### Example 4.

A polymer layer was formed in the same manner as in Example 2, except that upon preparing the polymer solution, the polythiophene (B) of Preparation Example 4 was used instead of the polythiophene (A) of Preparation Example 3, and an electrode and an electrode assembly were manufactured using the same.

### Example 5.

A polymer layer was formed in the same manner as in Example 1, except that upon preparing the polymer solution, polydopamine-uncoated carbon black particles (C-NERGY^{™} SUPER C65) were used instead of the polydopamine-coated conductive material particles (P) of Preparation Example 1, and an electrode and an electrode assembly were manufactured using the same.

### Example 6.

A polymer layer was formed in the same manner as in Example 2, except that upon preparing the polymer solution, polydopamine-uncoated carbon black particles (C-NERGY^{™} SUPER C65) were used instead of the polydopamine-coated conductive material particles (P) of Preparation Example 1, and an electrode and an electrode assembly were manufactured using the same.

### Comparative Example 1.

### Formation of polymer layer

A polymer solution was prepared by dispersing the polythiophene (A) of Preparation Example 3 in toluene at a concentration of about 4 weight% or so. Upon the preparation of the polymer solution, the polythiophene was dispersed using an ultrasonic disperser at a temperature of about 30°C for about 4 hours. The polymer solution was coated onto a current collector using a Meyer bar and dried in a drying oven at about 140°C for about 4 minutes or so (primary heat treatment). Thereafter, the current collector coated with the polymer solution was placed in an oven and heat-treated at 130°C for about 60 minutes or so (secondary heat treatment) to form a polymer layer (same thickness as Example 1). As the current collector, an Al foil with a thickness of about 15 µm or so was used.

### Manufacture of electrodes and electrode assembly

An active material layer was formed on the polymer layer to manufacture an electrode. A slurry containing lithium cobalt oxide (LiCoO₂), a carbon-based conductive material (ECP (Ketjen Black) 0.5%, SFG (Trimrex graphite) 0.4%, DB (Denka Black) 0.4%), PVDF (polyvinylidene fluoride), and NMP (N-methyl-2-pyrrolidone) in a weight ratio of 77.5:1:1:20.5 (LiCoO₂: conductive material: PVDF: NMP) was applied onto the polymer layer using a doctor blade, and dried for 30 minutes under a condition of 130°C to form the active material layer (slurry loading amount: about 16 mg/cm²). The active material layer of the electrode was rolled to a porosity of about 18% or so to form an active material layer with a thickness of about 58 µm or so, thereby manufacturing an electrode. An electrode assembly was manufactured in the same manner as in Example 1 using the electrode as a positive electrode.

Tables 1 and 2 summarize evaluation results of R_{3V}, R_{3.5V}, R₂₅, R₁₃₀, arithmetic mean roughness Ra, and scratch resistance, as measured in the above-described methods, for examples and comparative examples. In Tables 1 and 2 below, the units of R_{3V}, R_{3.5V}, R₂₅, and R₁₃₀ are Ω, and the unit of arithmetic mean roughness Ra is nm.

In Tables 1 and 2, Q is the value (R_{3V}/R_{3.5V}) obtained by dividing R_{3V} by R_{3.5V}, and P is the value (R₁₃₀/R₂₅) obtained by dividing R₁₃₀ by R₂₅.

Reference Example 1 in Table 2 is a case where the polymer layer is formed in the same manner as Example 1, and the electrode and the electrode assembly are manufactured, but the weight ratio (A: P) of the polythiophene (A) of Preparation Example 3 and the polydopamine coated conductive material particles (P) of Preparation Example 1 is 9:1.

**[Table 1]**

| | Example | | | | | |
|---|---|---|---|---|---|---|
| | 1 | 2 | 3 | 4 | 5 | 6 |
| R3V | 35,000 | 38,000 | 36,500 | 38,500 | 34,000 | 38,000 |
| R3.5V | 400 | 350 | 370 | 340 | 350 | 300 |
| Q | 87.5 | 108.6 | 98.6 | 113.2 | 97.1 | 126.7 |
| R25 | 45 | 33 | 40 | 30 | 42 | 35 |
| R130 | 30,000 | 32,000 | 31,000 | 31,500 | 30,000 | 33,000 |
| P | 666.7 | 969.7 | 775 | 1,050 | 714.3 | 942.9 |
| Ra | 130 | 150 | 130 | 150 | 250 | 300 |
| Scratch resistance | O | O | O | O | X | X |

**[Table 2]**

| | Comparative Example 1 | Reference Example 1 |
|---|---|---|
| R3V | 40,000 | 36,000 |
| R3.5V | 35,000 | 1,800 |
| Q | 1.1 | 20 |
| R25 | 800 | 60 |
| R130 | 40,000 | 30,000 |
| P | 50 | 500 |
| Ra | 50 | 100 |
| Scratch resistance | O | O |

From the results in Tables 1 and 2, in the case of Examples, the impedance reduction ratios (Q) confirmed while the external voltage increases from 3V to 3.5V are significantly higher than that of Comparative Example, which supports excellent electrical reactivity. When conductive particles surface-treated with a specific material are applied as the conductive material, it can be known that low surface roughness has been maintained even if the content of the conductive material increases, and scratch resistance can also stably be secured. In the case of Examples, it can be confirmed that the ratio of high-temperature impedance (R₁₃₀) to room-temperature impedance (R₂₅) is also very high, whereby it represents the PTC effect stably.

### Test Example 1.

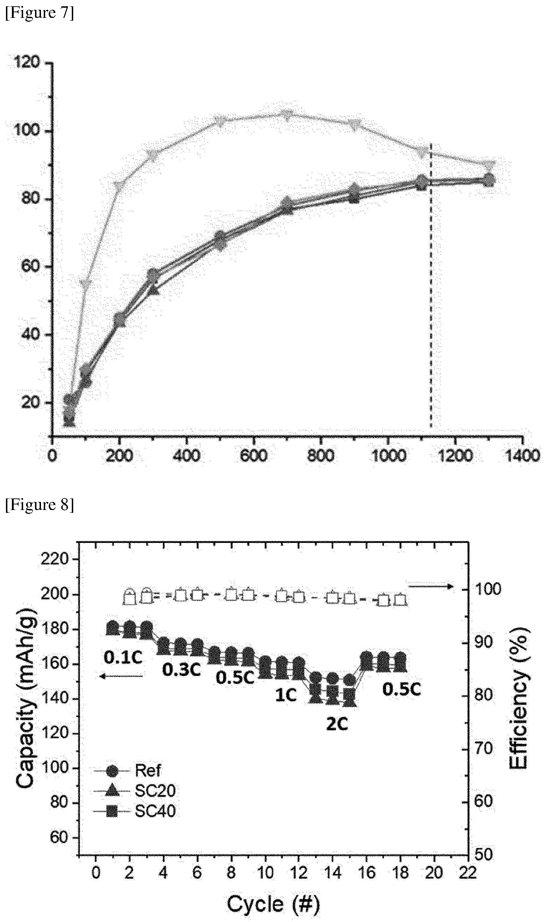

Cross-sections of an electrode before rolling (cross-sections of an electrode having a cross-sectional schematic diagram of Figure 4) were photographed using a confocal laser microscope to obtain a thickness profile of an active material layer (300) from a start portion (edge portion) (3001) of a sliding region (S) to an end point (3002) of the sliding region (S), and the results were summarized in Figure 7.

In the graph of Figure 7, the x-axis represents, in a range of the start point (3001 in Figure 2) of the sliding region (S), which is set to 0, to the end point (3002) of the sliding region (S), the distance (unit: µm) of any point in the range from the start point, and the y-axis represents the thickness (unit: µm) of the active material layer (300 in Figure 4) at each point.

In Figure 7, the ● marked line is for Example 1, the A marked line is for Example 2, the ▼ marked line is the case of Comparative Example 1, the ◆ marked line is for Reference Example 2, and the ■ marked line is for Reference Example 3.

Reference Example 2 above is a case where the electrode and electrode assembly are manufactured in the same manner as in Comparative Example 1, but the corona treatment (discharge current: about 200 mA) is performed on the polymer layer prior to forming the active material layer, and Reference Example 3 is a case where the electrode is manufactured in the same manner as in Example 1, but the electrode active material layer is directly formed thereon without forming the polymer layer.

Through Figure 7, it can be confirmed that in the case (Reference Example 3) where the active material layer is directly formed on the current collector surface without forming any polymer layer for obtaining the PTC (positive temperature coefficient), no protrusion portion occurs, but in the case (Comparative Example 1) of forming the polymer layer, the protrusion portion is formed at the midpoint (region of approximately 200µm to 1,200µm on the drawing) of the sliding region. Such a protrusion portion damages the electrode in the subsequent rolling process, and causes problems such as reduced electrode performance or difficulty in electrode application. However, the protrusion portion did not occur when the surface properties of the conductive polymer layer were adjusted through the corona treatment (Reference Example 2).

In the case of Examples 1 and 2, it can be confirmed that even when the polymer layer for the PTC effect is formed and no separate corona treatment is performed on the conductive polymer layer, the protrusion portion does not occur through securing coating properties through introduction of specific conductive particles and adjusting surface properties.

Table 3 below summarizes the results of the above drawing as numerical values.

In Table 3, the distance (µm) is the x-axis coordinate of Figure 7, and the thicknesses (µm) at the respective x-axis coordinates were summarized and described.

**[Table 3]**

| Distance (µm) | Example | | Comparative Example 1 | Reference Example | |
|---|---|---|---|---|---|
| | 1 | 2 | | 2 | 3 |
| 50 | 21 | 14 | 18 | 17 | 16 |
| 100 | 26 | 27 | 55 | 30 | 29 |
| 200 | 45 | 43.5 | 84 | 44.5 | 44 |
| 300 | 58 | 53 | 93 | 57 | 56.5 |
| 500 | 69 | 67 | 103 | 66.5 | 68 |
| 700 | 78 | 76.5 | 105 | 79 | 77 |
| 900 | 82.5 | 81 | 102 | 83 | 80 |
| 1100 | 85.5 | 85 | 94 | 85 | 84 |
| 1300 | 86 | 86 | 90 | 85.5 | 85 |

### Test Example 2.

Evaluation was conducted using the electrodes of Examples and the reference electrode (electrode of Reference Example 3 in Test Example 1). The electrodes of Examples and the reference electrode were made to have the same thickness by adjusting the thickness of the active material layer in the reference electrode. Rate capabilities of the electrodes of Examples and the reference electrode were compared. The rate capability was identified through a galvanostatic cycling test, and in this test, the C-rate was increased from 0.1C to 2C.

Figures 8 to 12 show the results of the test. In each drawing, SC20 is the results of Example 1, SC40 or SFL is the results of Example 2, and Ref is the results for the reference electrode.

Figure 8 is the results for a coin half-cell, where circular symbols indicate capacities, and square symbols indicate coulombic efficiencies.

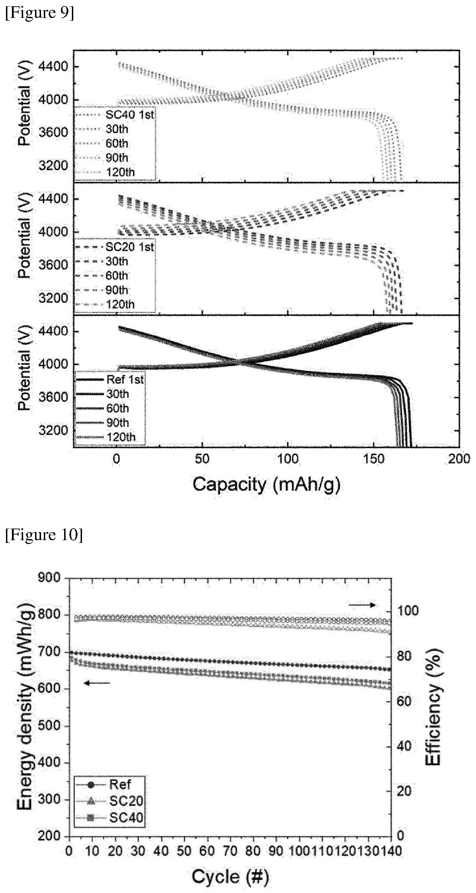

Figure 9 is charge-and-discharge profiles of the cycle test.

Figure 10 shows the results of energy density retention (140 cycles).

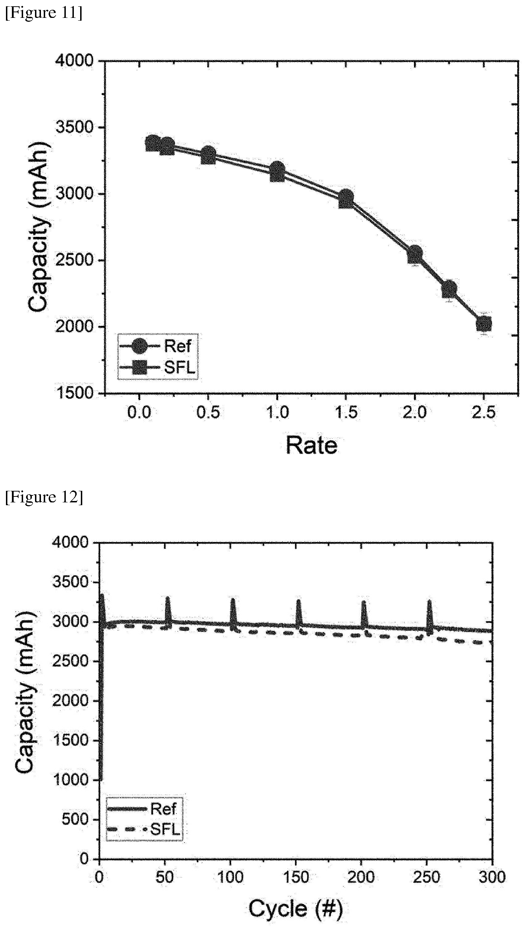

Figure 11 is the rate test results for a 3-Ah pouch cell.

Figure 12 shows the results of a cycle test for a 3-Ah pouch cell.

From the drawings, it can be confirmed that the electrode of Example exhibits an initial discharge capacity of 179.5 mAhg⁻¹ and a capacity loss of less than 1.2%. In the case of the electrode of Example, the capacity gap has been maintained below 2.2% even at 2C, and it can be confirmed therefrom that there is little capacity reduction due to the polymer layer under typical battery operating conditions. In the electrodes of Examples, the energy density retention of the electrodes of Examples 1 and 2 was 92% and 95%, respectively, after 140 cycles, which correspond to a negligible difference from the reference electrode (Figures 8 and 10).

A 3-Ah pouch cell using the electrode of Example 2 as the positive electrode and a 3-Ah pouch cell using the reference electrode as the positive electrode were each assembled.

The positive electrodes were each manufactured using the following method.

### <Electrode of Example>

Polymer layers were each formed on both surfaces of the same current collector as used in Example 2, in the same manner as in Example 2, and positive electrode active material layers were also formed on the relevant respective polymer layers, in the same manner as in Example 2, thereby manufacturing the electrode of Example. The positive electrode active material layers were formed to have a loading density of about 24.29 mg/cm or so and a porosity of about 3.99 g/cc or so.

### <Reference electrode>

The positive electrode as the reference electrode was manufactured in the same manner as in the electrode of Example, but manufactured by forming the positive electrode active material layers on both surfaces of the current collector, respectively, without forming the polymer layer.

The negative electrode upon manufacturing the 3-Ah pouch cell was manufactured using the following method.

### <Negative electrode>

The negative electrode was manufactured by forming negative electrode active material layers on both sides of a Cu foil (copper foil) (thickness: about 8µm). The negative active material layer was formed to have a loading density of about 13.88 mg/cm or so and a porosity of about 1.75 g/cc or so. Water (I), SBR (Styrene-Butadiene rubber) (average particle diameter (D50 particle diameter): 150nm) (II), a thickener (CMC, carboxymethyl cellulose) (III), an electrode active material (1) (IV) (artificial graphite (GT), average particle diameter (D50 particle diameter): 20µm), and an electrode active material (2) (V) (natural graphite (PAS), average particle diameter (D50 particle diameter): 15 µm) were mixed in a weight ratio of 48.5:1:0.5:45:5 (I: II: III: IV: V) to prepare a slurry. The slurry was applied onto the surface of the Cu foil to a thickness of 280 µm or so by a gap coating method, dried at about 75°C for about 10 minutes, and then rolled to form the active material layer.

A stack cell was manufactured by laminating 14 negative electrodes and 13 positive electrodes. The electrode of Example or the reference electrode was used as the positive electrode. A separator was positioned between the negative and positive electrodes. As the separator, the SRS separator applied in Examples was used. A 3-Ah pouch cell was manufactured using the stack cell and an electrolyte. As the electrolyte, GTHR KOREA's electrolyte (1 M LiPF₆ solution, solvent = EC: DMC: DEC (3:3:4, volume ratio) (EC: ethylene carbonate, DMC: dimethyl carbonate, EMC: ethylmethyl carbonate)) (3 µL mAh⁻¹) was used, and as the case, an envelope-type pouch (DNP, D-EL408PH(3)) was used. The pouch cell was manufactured to have horizontal and vertical dimensions of 50 mm and 90 mm, respectively.

The capacity difference between the reference electrode and the electrode of Example was maintained at less than 1.5% when cycled from 0.1C to 2.5C. In the case of the electrode of Example, the capacity retention was 97% in the recovery cycle after 300 cycles, which was consistent with the reference electrode. From such results, it can be confirmed that the gravimetric/volumetric energy density and power density in practical batteries are maintained even with the introduction of the polymer layer.

### Test Example 3.

A nail penetration test was performed, in which a nail was inserted into a battery to measure a temperature surge. An SUS nail (diameter: about 2.5 mm, nail tip angle: 60 degrees) was inserted through the center of the 3-Ah pouch cell manufactured in Test Example 2 to determine whether the 3-Ah pouch cell was ignited. The penetration was performed by moving the nail at a speed of about 50 mm/sec. In the case of the 3-Ah pouch cell to which the reference electrode was introduced, ignition was confirmed in six or more of ten 3-Ah pouch cells applied to the test, but in the case of the 3-Ah pouch cell to which the electrode of Example was applied, ignition was confirmed in only one of ten 3-Ah pouch cells applied to the test.

### Test Example 4.

To examine how battery stability was improved under mechanical abuse conditions using the 3-Ah pouch cell manufactured in Test Example 2, an impact test was performed.

The impact test was performed in an SOC (State of Charge) state of 100%.

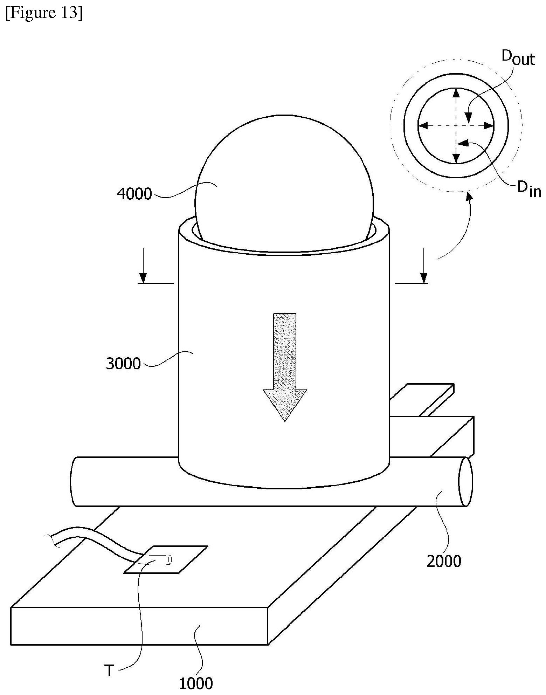

The impact test was performed in the manner shown in Figure 13.

That is, a temperature measurement device (T) (TC (temperature controller)) was attached to the surface of the 3-Ah pouch cell (1000) with an insulating tape, and a rod (2000) was positioned at the vertical center. The rod (2000) was an SUS rod with a circular cross-section of 20 mm or so in diameter and a length of 100 mm or so. A cylinder (3000) was positioned on the rod (2000). The cross-section of the cylinder (3000) is a circular shape with a diameter (Dₒᵤₜ) of 900 mm or so, and a hole with a diameter (Dᵢₙ) of 800 mm or so is formed in the center of the relevant circle. Thereafter, an impact test was performed by freely dropping an SUS spherical impact ball (4000) (weight: about 9.1 kg) with a diameter of 750 mm or so from a height of 610 mm or so toward the 3-Ah pouch cell (1000) through the hole in the center of the cylinder (3000).

Nineteen 3-Ah pouch cells to which the reference electrode was introduced and nineteen 3-Ah pouch cells to which the electrode of Example was introduced were each manufactured to perform the test. In the case of introducing the reference electrode, 12 of the 19 3-Ah pouch cells exploded, but in the case of introducing the electrode of Example, 17 of the 19 3-Ah pouch cells remained intact. The unexploded 3-Ah pouch cells were disassembled and the condition of each component was examined. Among the unexploded cells, with the reference electrode, the positive electrode (cathode) and the negative electrode (anode) from the cells introducing the reference electrode were significantly burnt, and the separators (SRSs) were severely deformed. Conversely, in the case of the unexploded cell among the cells introducing the electrode of Example, the respective components remained intact even after the external impact.

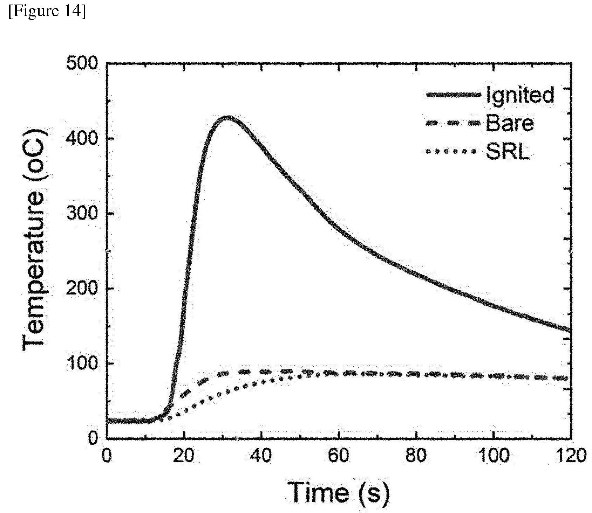

Figure 14 shows temperature changes (in situ) measured using a TC (temperature controller) (T) attached to an external surface of a pouch cell. If ignition occurred, the temperature rose rapidly (ignited), reaching up to 59°C/sec, due to cascade exothermic reactions between battery components.

Even in the absence of explosion, the pouch cell (w/o SRL) applying the reference electrode experienced localized heating, which was attributed to structural deformation from the impact-induced intense current flow. The temperature rise in the pouch cell introducing the reference electrode and unexploded occurred 1.7 times faster than in the pouch cell introducing the electrode of Example.

## Claims

1. An electrode assembly comprising:
a positive electrode; a negative electrode; and a separator between the positive electrode and the negative electrode, wherein
the separator comprises a porous polymer membrane and an inorganic particle layer,
the positive electrode comprises a current collector, and a polymer layer formed on the current collector,
the polymer layer comprises a conductive polymer and a conductive material, and
in the e positive electrode, Q in Equation 1 below is 10 or more: [Equation 1] $Q = {R}_{3 v} / {R}_{3.5 v}$
wherein, R_{3V} is the AC impedance resistance of the positive electrode under conditions of 25°C and 3V, and R_{3.5V} is the AC impedance resistance of the positive electrode at the time point when 1 second has passed after the conditions of 25°C and 3V are changed to conditions of 25°C and 3.5V.

2. The electrode assembly according to claim 1, wherein P by Equation 2 below is 60 or more: [Equation 2] $P = {R}_{130} / {R}_{25}$ wherein, R₂₅ is the AC impedance resistance by the polymer layer at 25°C, and R₁₃₀ is the AC impedance resistance by the polymer layer at 130°C.

3. The electrode assembly according to claim 1, wherein a ratio of arithmetic mean roughness Ra of the polymer layer to the thickness of the polymer layer is 50% or less.

4. The electrode assembly according to claim 1, wherein the polymer layer has arithmetic mean roughness Ra of 230 nm or less.

5. The electrode assembly according to claim 1, wherein a maximum temperature during an impact test is 200°C or less, and a temperature rise rate is 40°C/sec or less.

6. The electrode assembly according to claim 1, wherein the conductive polymer has a long-chain hydrocarbon functional group.

7. The electrode assembly according to claim 6, wherein the conductive polymer contains, as the long-chain hydrocarbon functional group, a first hydrocarbon functional group having 10 or more carbon atoms and a second hydrocarbon functional group having 9 or less carbon atoms.

8. The electrode assembly according to claim 7, wherein a ratio of the total mole number of a monomer unit having the first hydrocarbon functional group and a monomer unit having the second hydrocarbon functional group in the conductive polymer is 80 mol% or more.

9. The electrode assembly according to claim 8, wherein a ratio M2/M1 of a mole number M2 of the second hydrocarbon functional group or a monomer unit having the functional group to a mole number M1 of the first hydrocarbon functional group or a monomer unit having the functional group is in a range of 0.01 to 100.

10. The electrode assembly according to claim 6, wherein the conductive polymer further contains a polar functional group.

11. The electrode assembly according to claim 10, wherein the polar functional group is a carboxyl group, a hydroxy group, an amino group, a cyano group, a nitro group, an ether group, or a functional group of Formula 1 below: 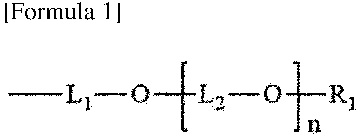 wherein, L₁ is a single bond, an alkylene group, or an alkylidene group, L₂ is an alkylene group or an alkylidene group, R₁ is hydrogen or an alkyl group, and n is a number in a range of 1 to 10.

12. The electrode assembly according to claim 10, wherein a ratio of a mole number of a monomer unit having the long-chain hydrocarbon functional group to a mole number of a monomer unit having the polar functional group in the conductive polymer is in a range of 1 to 500.

13. The electrode assembly according to claim 1, wherein the conductive material is carbon particles, carbon fibers, graphene, graphite, carbon black, carbon nanotubes, or metal particles.

14. The electrode assembly according to claim 1, wherein the conductive material comprises a conductive core and a surface layer present on the surface of the core, and the surface layer comprises a polyphenol-based compound.

15. The electrode assembly according to claim 1, wherein the positive electrode further comprises an active material layer formed on the polymer layer.

16. A secondary battery comprising the electrode assembly of any one of claims 1 to 15.
